Europäisches Patentamt

(19) European Patent Office

Office européen des brevets

(11) **EP 0 912 952 B1**

(12) **EUROPÄISCHE PATENTSCHRIFT**

(45) Veröffentlichungstag und Bekanntmachung des Hinweises auf die Patenterteilung:
**05.01.2000 Patentblatt 2000/01**

(51) Int Cl.[7]: **G06F 17/30**

(21) Anmeldenummer: **97940093.4**

(22) Anmeldetag: **20.08.1997**

(86) Internationale Anmeldenummer:
**PCT/EP97/04520**

(87) Internationale Veröffentlichungsnummer:
**WO 98/10357 (12.03.1998 Gazette 1998/10)**

(54) **DATENBANKSYSTEM UND VERFAHREN ZUM VERWALTEN EINES N-DIMENSIONALEN DATENBESTANDS**

DATABASE SYSTEM AND METHOD OF ORGANIZING AN N-DIMENSIONAL DATA STOCK

SYSTEME DE BANQUE DE DONNEES ET PROCEDE DE GESTION D'UN STOCK DE DONNEES N-DIMENSIONNEL

(84) Benannte Vertragsstaaten:
**AT BE CH DE DK ES FI FR GB GR IE IT LI LU NL PT SE**

(30) Priorität: **02.09.1996 DE 19635429**

(43) Veröffentlichungstag der Anmeldung:
**06.05.1999 Patentblatt 1999/18**

(73) Patentinhaber: **Bayer, Rudolf**
**82194 Gröbenzell (DE)**

(72) Erfinder: **Bayer, Rudolf**
**82194 Gröbenzell (DE)**

(74) Vertreter: **Hössle, Markus, Dipl.-Phys.**
**Hössle & Kudlek**
**Patentanwälte**
**Moserstrasse 8**
**70182 Stuttgart (DE)**

(56) Entgegenhaltungen:
- **NAKAMURA Y ET AL: "DATA STRUCTURES FOR MULTI-LAYER N-DIMENSIONAL DATA USING HIERARCHICAL STRUCTURE" 10TH INTERNATIONAL CONFERENCE ON PATTERN RECOGNITION , Bd. 2, 16.Juni 1990, NEW JERSEY, US, Seiten 97-102, XP000166483**
- **YUTAKA OHSAWA ET AL: "A NEW TREE TYPE DATA STRUCTURE WITH HOMOGENEOUS NODES SUITABLE FOR A VERY LARGE SPATIAL DATABASE" PROCEEDINGS OF THE INTERNATIONAL CONFERENCE ON DATA ENGINEERING, LOS ANGELES, FEB. 5 - 9, 1990, Nr. CONF. 6, 5.Februar 1990, INSTITUTE OF ELECTRICAL AND ELECTRONICS ENGINEERS, Seiten 296-303, XP000279959**
- **TERAOKA T ET AL: "THE MP-TREE: A DATA STRUCTURE FOR SPATIO-TEMPORAL DATA" PROCEEDINGS OF THE ANNUAL INTERNATIONAL PHOENIX CONFERENCE ON COMPUTERS AND COMMUNICATIONS, SCOTTSDALE, MAR. 28 - 31, 1995, Nr. CONF. 14, 28.März 1995, INSTITUTE OF ELECTRICAL AND ELECTRONICS ENGINEERS, Seiten 326-333, XP000548494**

**Beschreibung**

Die vorliegende Erfindung betrifft ein Datenbanksystem sowie ein Verfahren zum Verwalten eines in einem n-dimensionalen Würfel mit n>1 liegenden Datenbestands.

Zur Verwaltung umfangreicher eindimensionaler Datenmengen auf Massenspeichern, wie beispielsweise Magnetplattenspeichern, ist als Datenstruktur der sogenannte B-Baum (oder auch B*-Baum oder Präfix-B-Baum) bekannt. Die Datenstruktur des B-Baums hat gegenüber derjenigen eines einfachen Suchbaums den Vorteil, daß beim Datenzugriff geringere Suchzeiten notwendig sind. Die Suchzeit, die sich zum Auffinden gewisser Daten ergibt, beträgt bei einem einfachen Suchbaum mit n Knoten mindestens $\log_2(n)$ Schritte. Bei einem Suchbaum mit 1.000.000 Knoten muß man daher mit $\log_2(1.000.000) \approx 20$ Plattenzugriffen rechnen. Nimmt man eine mittlere Zugriffszahl von 0,1 Sek. an, so benötigt die Suche eines Knotens 2 Sek. Dieser Wert ist für die Praxis zu groß. Bei der Datenstruktur des B-Baums wird die Zahl der Plattenzugriffe reduziert, indem man je Zugriff nicht einen einzelnen Knoten, sondern ein ganzes, einem Knoten zugeordnetes Teilstück von der Magnetplatte in den Hauptspeicher überträgt und innerhalb dieses Teilstücks sucht. Teilt man beispielsweise den B-Baum in Bereiche zu je sieben Knoten und überträgt mit jedem Plattenzugriff einen solchen Bereich in den Hauptspeicher, so reduziert sich die Zahl der Plattenzugriffe für die Suche eines Knotens von maximal 6 auf maximal 2. Bei 1.000.000 Knoten benötigt man somit nur noch $\log_8(1.000.000) = 7$ Zugriffe. In der Praxis unterteilt man den Suchbaum meistens in Teilbereiche der Größe $2^8-1$ bis $2^{10}-1$ Knoten. Bei einer Bereichsgröße von 255 Knoten benötigt man für die Suche eines Knotens in einem Baum mit 1.000.000 Knoten $\log_6(1\ Mio) \approx 2,5$ Plattenzugriffe, so daß die Suche nach einem gegebenen Wert nur noch etwa 0,3 Sek. dauert. Die Suchzeit innerhalb eines Teilbereichs mit 255 Knoten, der sich im Hauptspeicher befindet, kann gegenüber dem Plattenzugriff vernachlässigt werden. Der B-Baum ist ein höhen-balancierter Baum, bei dem alle Blätter auf dem gleichen Niveau liegen.

Zur Verwaltung eines multi-dimensionalen Datenbestands sind aus *K. Mehlhorn: Multidimensional Searching und Computational Geometry, Springer, Heidelberg 1984,* die sogenannten dd-Bäume bekannt. Mit den dd-Bäumen lassen sich prinzipiell drei Arten von Anfragen durchführen, nämlich Punkt-Anfragen, BereichsAnfragen und Anfragen, bei denen manche Intervalle als (-unendlich, +unendlich) angegeben sind. Die Datenstruktur eines dd-Baums gestattet jedoch nur bei Punktanfragen einen schnellen Zugriff, da dann nur ein Pfad im Baum abgesucht werden muß. Bei den anderen Anfragen kann es geschehen, daß der gesamte Baum durchsucht werden muß. Darüber hinaus sind dd-Bäume statisch, d.h. die gesamte zu verwaltende Objektmenge muß schon bekannt sein, bevor der dd-Baum aufgebaut werden kann. Bei den meisten Anwendungen in der Praxis ist aber die Objektmenge dynamisch, d.h. Objekte müssen in beliebiger Reihenfolge und jederzeit im Baum eingefügt und gelöscht werden können, ohne daß der ganze Baum neu aufgebaut werden muß. Des weiteren eignen sich dd-Bäume nur für Hauptspeicheranwendungen, jedoch nicht für Peripheriespeicher, die zum Abspeichern sehr großer Datenmengen benötigt werden.

In *"The Grid File" von Nievergelt et al, ACM TODS, Bd. 9, Heft 1, März 1984* sind zur Verwaltung multidimensionaler Daten sogenannte Grid-Files beschrieben, bei denen Anfragen für Punkte und Bereiche auf der Basis einer Inhaltsverzeichnis-Struktur, dem sogenannten Grid, durchgeführt werden. Obwohl diese Datenverwaltung eine schnelle Suche bei Punkt- und Bereichsanfragen gewährleistet, handelt es sich um ein statisches Verfahren, so daß beim dynamischen Einfügen und Löschen von Datenobjekten regelmäßig die gesamte Inhaltsverzeichnis-Struktur völlig umorganisiert werden muß. Somit ist dieses Verfahren für viele Anwendungen, insbesondere für Online-Anwendungen nicht geeignet.

Aus *A. Guttmann: A dynamic Index Structure for spatial Searching, Proceedings ACM SIGMOD Intl. Conference on Management of Data, 1984, Seiten 47-57,* sind als Datenstruktur zur Verwaltung multidimensionaler Daten sogenannte R-Bäume bekannt. Diese Bäume, die hauptsächlich bei sogenannten Geo-Datenbanken Anwendung finden, sind ähnlich wie B-Bäume in der Höhe balanciert und gestatten auch dynamisches Einfügen und Löschen von Objekten. Bei der Beantwortung von Anfragen sind jedoch keine schnellen Zugriffszeiten garantiert, weil unter Umständen beliebig viele Pfade in dem betreffenden Baum, im Extremfall sogar der gesamte Baum, durchsucht werden müssen, um eine Anfrage zu beantworten. Somit sind diese R-Bäume für die meisten Online-Anwendungen nicht geeignet.

Aus *Y. Nakamura et al: Data Structures for multi-layer n-dimensional data using hierarchical structure, 10th International Conference on pattern recognition, Band 2, 16. Juni 1990, IEEE Computer Society Press, New Jersey, USA, Seiten 97-102* ist ein Spaltverfahren für einen mehrdimensionalen rechteckigen Raum bekannt. In dem bekannten Verfahren wird ein gegebener mehrdimensionaler rechteckiger Raum in zwei Unterräume aufgespaltet, sobald die Anzahl der Datenpunkte in dem Raum die Kapazität einer Datenseite überschreitet. Das Aufspalten des Ausgangsraumes erfolgt durch Ausschneiden eines Teilrechtecks. Die durch diese Aufspaltung neu entstandenen räumlichen Strukturen, nämlich ein ausgeschnittenes Rechteck und der Rest des Ausgangsraumes werden als Schichten in einem BD-Baum strukturiert, wobei die entstehende Baumstruktur bei mehreren ausgeschnittenen Teilräumen von der Reihenfolge des Ausschneidens der einzelnen Teilräume abhängt. Die derart entstandene BD-Baumstruktur stellt einen Binärbaum dar, bei dem an jedem Verzweigungsknoten festgelegt wird, welches Rechteck als neuer BD-Teilraum ausgeschnitten wird. Dieses sukzessive Ausschneiden hat zur Folge, daß der BD-Baum nach unten wächst, so daß beim Einfügen, Löschen und Suchen von Datenpunkten, d.h. Datenobjekten, im gesamten Raum ein Pfad von der Baumwurzel bis zu einem Blatt (Astende) durchlaufen werden muß. Dabei muß bei jedem Zwischenknoten geprüft werden, ob sich ein gesuchter Punkt in dem zugeordneten ausgeschnittenen Teilraum oder in dem komplementären Restraum befindet. Der Suchaufwand kann damit proportional mit der Größe des Datenbestandes wachsen, was bei großen und sehr großen Datenbeständen zu einem schlechten Effizienzverhalten führt.

Das heute in der Praxis am weitesten verbreitete verfahren zur Verwaltung eines multidimensionalen Datenbestands basiert auf den ursprünglichen eindimensionalen B-Bäumen, wobei für jede Dimension des Ausgangsdatenbestands jeweils ein B-Baum eingesetzt wird, so daß Bereichsanfragen in einem n-dimensionalen Datenbestand durch n B-Bäume unterstützt werden. Bei einer Bereichsanfrage werden somit für jede Dimension sämtliche Objekte vom peripheren Speicher geholt, deren Werte innerhalb des in der Anfrage spezifizierten Intervalls für diese Dimension liegen. Diese Datenobjekte bilden die Treffermenge in der betreffenden Dimension. Um die gewünschte Antwortmenge zu bestimmen, muß eine Schnittmenge der Treffermengen sämtlicher Dimensionen berechnet werden, was üblicherweise erst eine Sortierung dieser Mengen erfordert. Auch beim Einfügen und Löschen eines Datenobjekts müssen entsprechend n B-Bäume durchsucht und modifiziert werden.

Ausgehend hiervon liegt der Erfindung die Aufgabe zugrunde, ein Datenbanksystem und ein Verfahren zum Verwalten eines n-dimensionalen Datenbestands bereitzustellen, das aufgrund verbesserter Zugriffszeiten insbesondere zur Verwendung in Online-Anwendungen geeignet ist und das ein dynamisches Einfügen und Löschen von Datenobjekten gestattet.

Zur Lösung der Aufgabe wird erfindungsgemäß ein Datenbanksystem mit den Merkmalen des Anspruches 1 sowie ein Verfahren zum Verwalten eines n-dimensionalen Datenbestandes mit n > 1 mit den Merkmalen des Anspruches 8 vorgeschlagen. Das erfindungsgemäße Datenbanksystem umfaßt eine Recheneinrichtung, einen Hauptspeicher und eine Speichereirichtung, bei der es sich insbesondere um eine penphere Speichereinrichtung handelt. Der Grundgedanke der Erfindung liegt darin, einen zu verwaltenden multidimensionalen Datenbestand in einen mehrdimensionalen Würfel zu legen und zum Indizieren und Speichern dieses Datenbestands mittels der Recheneinnchtung ein wiederholtes iteratives Unterteilen des mehrdimensionalen Würfels in allen Dimensionen in Subwürfel vorzunehmen. Das Unterteilen wird dabei so oft wiederholt, bis aufeinanderfolgende Subwürfel zu Regionen zusammenfaßbar sind, die jeweils eine Menge von Datenobjekten beinhalten, die auf einer der Speicherseiten gegebener Speicherkapazität der insbesondere peripheren Speichereinrichtung abspeicherbar sind. Da die Regionen aus aufeinanderfolgenden Subwürfeln zusammengefaßt sind, liegen auch die Regionen hintereinander, so daß sie eine eindimensionale Struktur bilden. Somit ist erfindungsgemäß bei einem Einfügen bzw. Löschen von Datenobjekten lediglich die Modifikation einer einzigen Datenstruktur, beispielsweise eines Baumes, erforderlich.

In Ausgestaltung der Erfindung erfolgt das Abspeichern der Datenobjekte einer Region auf einer Speicherseite gegebener Speicherkapazität unter Zuordnung eines Zeigers zu der Speicherseite und einer die Regionengrenzen bezeichnenden Adresse. Somit sind jeder abzuspeichernden Region eindeutige, die Regionengrenzen definierende Adressen sowie ein auf die Speicherseite. auf welcher die betreffende Region abgespeichert ist, verweisender Zeiger zugeordnet. Dadurch wird das Auffinden der Region und der in der Region enthaltenen Datenobjekte bei Verwaltungsvorgängen wie Beantwortung von Anfragen, Löschen oder Einfügen von Datenobjekten erleichtert.

In weiterer Ausgestaltung der Erfindung erfolgt die Speicherung des Zeigers und der Adresse in einem B-Baum, B*-Baum oder Präfix-B-Baum, so daß bei einer Adreßsuche eine einfache und schnell durchzuführende Suche in einem B-Baum zur Identifikation der benötigten Region über den der Adresse zugeordneten und auf die Speicherseite der benötigten Region verweisenden Zeiger erfolgen kann.

In weiterer Ausgestaltung der Erfindung erfolgt die Speicherung der Datenobjekte selbst in den Blattseiten des B-Baums, B*-Baums oder Präfix-B-Baums.

In vorteilhafter Ausgestaltung der Erfindung besteht die die Regionengrenzen bezeichnende Adresse aus Angaben über den letzten der die Region bildenden Subwürfel. Besonders vorteilhaft erweist sich ein Datenbanksystem, bei dem die Adresse Angaben über die Anzahl der aufjeder Unterteilungsstufe in der Region enthaltenen Subwürfel umfaßt. Eine Region ist somit eindeutig bezeichnet, wenn der letzte vollständig in der Region enthaltene Subwürfel durch die Adress-Angabe ebenfalls eindeutig bezeichnet ist. Der Beginn der Region wird dabei durch die Adress-Angabe über den letzten der die vorhergehende Region bildenden Subwürfel angegeben.

In Ausgestaltung des erfindungsgemäßen Verfahrens gemäß Anspruch 8 wird ein Verfahren mit den Merkmalen des Anspruches 9 vorgeschlagen. Mit dem erfindungsgemäßen Verfahren wird zum Indizieren und Speichern eines multidimensionalen Datenbestands dieser Datenbestand in einen n-dimensionalen Würfel mit n>1 gelegt. Dieser Würfel bildet in seiner Gesamtheit eine Ausgangsregion, die sämtliche Datenobjekte des Datenbestands enthält. Sollte die Anzahl der vorhandenen Datenobjekte kleiner oder gleich sein als die der vorgegebenen Speicherkapazität einer Speicherseite entsprechende Zahl von Datenobjekten, so wird die Ausgangsregion auf einer Speicherseite abgespeichert. Andernfalls wird die Ausgangsregion entlang einer Spaltadresse gespalten, wobei die Spaltadresse so gewählt wird, daß etwa entlang der Datenmitte zwei neue Teilregionen erzeugt werden. Mit jeder dieser Teilregionen wird anschließend so verfahren, wie zuvor mit der Ausgangsregion, d.h. es wird die Anzahl der jeweils in der Teilregion enthaltenen Datenobjekte bestimmt und mit der der vorgegebenen Speicherkapazität einer Speicherseite entsprechenden Zahl verglichen. Ist der Datenbestand nicht größer als die der vorgegebenen Speicherkapazität entsprechende Zahl, so wird die betreffende Region auf einer Speicherseite abgespeichert, andernfalls wird sie wiederum entlang der Datenmitte gespalten und das Verfahren beginnt von neuem.

Vorteilhafterweise erfolgt das Abspeichern der Datenobjekte einer Region oder Teilregion unter paralleler Abspeicherung einer der betreffenden Region zugeordneten Adresse sowie eines der Adresse zugeordneten und auf die Speicherseite, auf der die abgespeicherten Datenobjekte enthalten sind, verweisenden Zeigers. Bei der parallel abzuspeichernden Adresse kann es sich vorteilhafterweise um die Spaltadresse handeln, die das Ende der einen und den Anfang der anderen Region angibt.

In Ausgestaltung der Erfindung erfolgt die Speicherung der Adresse und des Zeigers in einem B-Baum, B∗-Baum oder Präfix-B-Baum, wobei durch aufeinanderfolgende Adressen jeweils Regionen definiert werden, deren Datenobjekte jeweils auf einer Speicherseite gegebener Speicherkapazität abgespeichert sind.

In Ausgestaltung des erfindungsgemäßen Verfahrens gemäß Anspruch 8 wird ein Verfahren zum Einfügen von Datenobjekten mit den Merkmalen des Anspruches 12 vorgeschlagen. Vorteilhafterweise handelt es sich bei dem abgespeicherten n-dimensionalen Datenbestand um einen gemäß dem vorstehend beschriebenen erfindungsgemäßen Verfahren indizierten und abgespeicherten Datenbestand. Erfindungsgemäß wird ausgehend von den Koordinaten des einzufügenden Datenobjekts eine das Datenobjekt enthaltende Region des n-dimensionalen Datenbestands sowie die Speicherseite, auf der diese Region abgespeichert ist, ermittelt. Daraufhin werden die auf dieser Speicherseite gespeicherten Datenobjekte gezählt. Sollte die Anzahl der gespeicherten Datenobjekte kleiner sein als die der gegebenen Speicherkapazität der Speicherseite entsprechende Anzahl, so wird das einzufügende Datenobjekt ebenfalls auf dieser Speicherseite abgespeichert. Andernfalls wird eine Spaltadresse für die auf dieser Speicherseite gespeicherte Region derart ausgewählt, daß durch Spalten der Region entlang dieser Spaltadresse eine erste und eine zweite Teilregion erzeugt werden. in welchen jeweils etwa die Hälfte der der gegebenen Speicherkapazität entsprechenden Anzahl an Datenobjekten enthalten ist. Dann wird das einzufügende Datenobjekt in diejenige Teilregion eingefügt, in welcher die Koordinaten des Datenobjekts liegen, woraufhin die erste und die zweite Teilregion auf jeweils einer Speicherseite abgespeichert werden.

Erfindungsgemäß ist somit in der gegebenen Datenstruktur ein dynamisches Einfügen von Datenobjekten möglich, ohne daß die Gesamtheit der Datenstruktur modifiziert oder neu angelegt werden muß. Sollte durch das Einfügen des neuen Datenobjekts die Region, in welche die Einfügung vorgenommen wurde, nicht mehr auf einer Speicherseite abspeicherbar sein, so wird diese Region in zwei weitere Regionen aufgespalten, wodurch lediglich die betreffende zu spaltende Region bzw. die durch die Spaltung neu entstehenden Teilregionen modifiziert und neu abgespeichert werden müssen.

Vorteilhafterweise erfolgt das Auffinden der Speicherseite in dem erfindungsgemäßen Verfahren zum Einfügen von Datenobjekten mittels in einem B-Baum, B*-Baum oder Präfix-B-Baum gespeicherter, den Speicherseiten zugeordneter Adressen und Zeiger. Dadurch gestaltet sich das Auffinden der gesuchten Speicherseite besonders einfach und schnell. Entsprechend erweist es sich als vorteilhaft, wenn das Speichern der neu entstandenen Teilregionen unter Ersetzung des vormaligen Zeigers und der Adresse der gespalteten Region durch jeweils der ersten und der zweiten Teilregion zugeordnete Adressen und Zeiger erfolgt. Dabei kann beispielsweise für die erste Teilregion als begrenzende Adresse die Spaltadresse verwendet werden und für die zweite Teilregion kann die begrenzende Adresse der gespaltenen Region verwendet werden.

Als besonders vorteilhaft erweist es sich, wenn die Speicherung der Adresse und des Zeigers in einem B-Baum, B*-Baum oder Präfix-B-Baum erfolgt, wobei durch aufeinanderfolgende Adressen jeweils Regionen definiert werden, deren Datenobjekte jeweils auf einer Speicherseite gegebener Speicherkapazität abgespeichert sind.

In Ausgestaltung des erfindungsgemäßen Verfahrens gemäß Anspruch 8 wird ein Verfahren zum Löschen von Datenobjekten mit den Merkmalen des Anspruches 16 vorgeschlagen. Demnach werden ausgehend von den Koordinaten des zu löschenden Datenobjektes die das Datenobjekt enthaltende Region des n-dimensionalen Datenbestands sowie die Speicherseite, auf welcher diese Region abgespeichert ist, bestimmt und das zu löschende Objekt wird auf dieser Speicherseite gelöscht. Danach wird die Anzahl der auf dieser Speicherseite gespeicherten Datenobjekte bestimmt und die Region wird mit einer ihrer beiden Nachbarregionen verschmolzen, falls die Anzahl der gespeicherten Datenobjekte kleiner ist als etwa die Hälfte der der gegebenen Speicherkapazität der Speicherseite entsprechenden Anzahl. Daraufhin wird wiederum die Anzahl der in der durch das Verschmelzen neu entstandenen Region vorhandenen Datenobjekte bestimmt. Ist diese Anzahl nicht größer als die der gegebenen Speicherkapazität einer Speicherseite entsprechende Anzahl, so wird die Region auf einer Speicherseite abgespeichert, andernfalls wird eine Spaltadresse für die Region derart ausgewählt, daß durch Spalten entlang der Spaltadresse eine erste Teilregion und eine zweite Teilregion erzeugt werden, die jeweils etwa die Hälfte der in der zu spaltenden Region enthaltenen Datenobjekte enthalten, woraufhin die entstandenen Teilregionen aufjeweils einer Speicherseite abgespeichert werden.

Vorteilhafterweise erfolgt auch bei diesem Verfahren das Auffinden der Speicherseite mittels in einem B-Baum, B*-Baum oder Präfix-B-Baum gespeicherter, den Speicherseiten zugeordneter Adressen und Zeiger.

In Ausgestaltung des erfindungsgemäßen Verfahrens gemäß Anspruch 8 wird ein Verfahren zum Durchführen einer Datenanfrage auf der Grundlage eines gegebenen n-dimensionalen Anfragebereichs mit den Merkmalen des Anspruches 18 vorgeschlagen. Danach werden die Koordinaten des niedrigsten und des höchsten Schnittpunktes des gegebenen Anfragebereichs mit dem n-dimensionalen Datenbestand sowie diejenige Region bestimmt, in welcher der niedrigste Schnittpunkt liegt. Danach wird die Speicherseite aufgefunden, auf der die ermittelte Region abgespeichert ist, und es werden sämtliche auf dieser Speicher seite abgespeicherte Datenobjekte ermittelt, die eine Schnittmenge mit dem Anfragebereich bilden.

Die ermittelten Datenobjekte werden daraufhin ausgegeben. Dann wird der in der Abfolge letzte Subwürfel der ermittelten Region bestimmt, der den Anfragebereich schneidet und die Datenanfrage wird beendet, falls der höchste Schnittpunkt des Anfragebereichs in diesem Subwürfel liegt. Andernfalls wird der nächste Subwürfel derselben Ebene und desselben übergeordneten Würfels ermittelt, der den Anfragebereich schneidet, und es werden die Koordinaten des niedrigsten Schnittpunktes des Anfragebereichs mit dem neu ermittelten Subwürfel bestimmt, woraufhin das Verfahren beim Bestimmen derjenigen Region, in welcher der niedrigste Schnittpunkt liegt, weitergeführt wird, falls ein Subwürfel ermittelt wurde. Andernfalls wird der nächste Subwürfel der Ebene des übergeordneten Würfels ermittelt, der den Anfragebereich schneidet und die Ermittlung des nächsten Subwürfels derselben Ebene und desselben übergeordneten Würfels, der den Anfragebereich schneidet, wird mit den Subwürfeln des neu ermittelten Würfels durchgeführt. Wird kein Subwürfel der Ebene des übergeordneten Würfels ermittelt, übernimmt der übergeordnete Würfel die Rolle des Subwürfels und es wird dann der nächste Subwürfel dieser Ebene und desselben übergeordneten Würfels ermittelt, der den Anfragebereich schneidet. So werden erfindungsgemäß sukzessive die Subwürfel aller relevanten übergeordneten Würfel und wiederum derer übergeordneter Würfel bezüglich Schnittmengen von Datenobjekten mit dem Anfragebereich überprüft.

Die Erfindung ist in den Zeichnungen anhand von Ausführungsbeispielen dargestellt und wird im folgenden unter Bezugnahme auf die Zeichnungen ausführlich erläutert.

Fig. 1 zeigt einen 2-dimensionalen Würfel, in dem ein nicht näher dargestellter 2-dimensionaler Datenbestand liegt und der in vier gleichgroße Subwürfel unterteilt ist.

Fig. 2 zeigt einen 3-dimensionalen Würfel, in dem ein nicht näher dargestellter 3-dimensionaler Datenbestand liegt und der in acht gleichgroße Subwürfel unterteilt ist.

Figg. 3.1 bis 3.4. dienen zur Veranschaulichung der Adreß-Zuweisung von Subwürfeln in einem 2-dimensionalen Würfel.

Fig. 4 dient zur Veranschaulichung der Adreß-Zuweisung von Subwürfeln in einem 3-dimensionalen Würfel.

Fig. 5 veranschaulicht die Abspeicherung von Adressen und Zeigern.

Figg. 6.1 und 6.2 veranschaulichen die Modifizierung und Abspeicherung von Adressen und Zeigern bei der Aufspaltung einer Region beim Einfügen von Datenobjekten.

Fig. 7 zeigt einen in eine Vielzahl von Regionen aufgeteilten 2-dimensionalen Würfel mit einem nicht näher dargestellten Datenbestand.

Fig. 8 zeigt einen Anfragebereich für den 2-dimensionalen Fall.

Fig. 9 zeigt den Abfragebereich der Fig. 8 mit einem in dem Abfragebereich liegenden Subwürfel.

Fig. 10 zeigt den Abfragebereich der Figg. 8 und 9 mit mehreren in dem Anfragebereich liegenden und den Anfragebereich schneidenden Subwürfeln.

Fig. 11 zeigt einen Datenbestand am Beispiel eines ausgedehnten Objekts.

Zur Verwaltung eines n-dimensionalen Datenbestands wird erfindungsgemäß davon ausgegangen, daß der Datenraum, in dem sich die zu verwaltenden Datenobjekte befinden, ein n-dimensionaler Würfel ist oder von einem solchen Würfel eingeschlossen wird, wobei n eine beliebige natürliche Zahl mit n>1 ist. Dieser Würfel wird *umgebender Würfel* genannt.

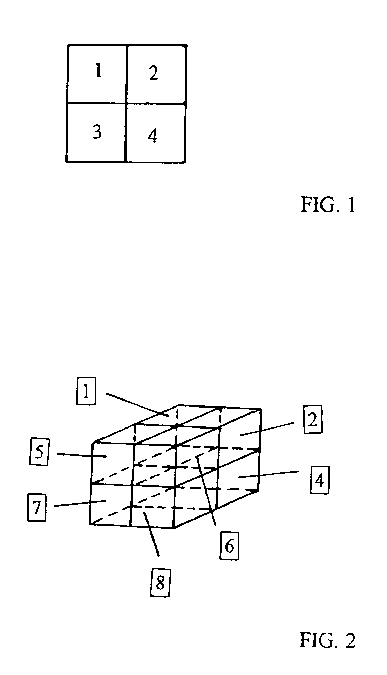

Der umgebende Würfel wird unterteilt in $2^n$ Subwürfel gleicher Größe, indem jede Dimension des Würfels halbiert wird. Diese Subwürfel werden in einer festzulegenden Reihenfolge von 1 bis $2^n$ durchnumeriert. Fig. 1 zeigt einen 2-dimensionalen Würfel, also ein Quadrat, für den Fall eines 2-dimensionalen Datenraums, unterteilt in $2^2 = 4$ gleichgroße Subwürfel, die links oben beginnend von links nach rechts und von oben nach unten durchnumeriert sind.

Fig. 2 zeigt einen umgebenden Würfel eines 3-dimensionalen Datenraums mit $2^3 = 8$ gleichgroßen Subwürfeln, die ebenfalls durchnumeriert sind, und zwar hinten links beginnend von links nach rechts, von oben nach unten und von hinten nach vorn. Demgemäß kommt der Subwürfel mit der Nummer 3 in der Zeichnung der Fig. 2 links hinten unten zu liegen und ist nicht sichtbar.

Jeder der in den Figg. 1 und 2 gezeigten Subwürfel des Ausgangswürfels kann nach demselben Verfahren wiederum in $2^n$ Subwürfel mit der Numerierung von 1 bis $2^n$ unterteilt werden und diese Unterteilung kann rekursiv (bzw. iterativ) beliebig oft fortgesetzt werden. In der praktischen Anwendung der Erfindung wird die Unterteilung solange durchgeführt, bis durch zusammenliegende Subwürfel Regionen gebildet werden können, deren Anzahl von Datenobjekten auf einer Speicherseite gegebener Speicherkapazität speicherbar sind.

Hat der Ausgangswürfel eine Seitenlänge *I*, so haben die Subwürfel nach s Unterteilungen noch die Seitenlänge $(1/2^s)*I$. Zur identifizierung der Würfel werden diese entsprechend der jeweiligen Unterteilung in eine *Stufe s* eingeordnet. Demgemäß hat der Ausgangswürfel die *Stufe 0,* die in den Fig. 1 und 2 dargestellten Subwürfel haben die *Stufe 1* usw.

Eine *Area A* ist nun ein spezieller Unterraum des Ausgangswürfels, der wie folgt entsteht:

- auf der Stufe 1 gehören die ersten $a_1$ Subwürfel vollständig zu der *Area A,* wobei $0 <= a_1 < 2''$ ist
- auf der Stufe 2 gehören die ersten $a_2$ Subwürfel des Subwürfels $a_1 + 1$ der ersten Stufe zu der *Area A*
- usw. bis zur Stufe *i,* wo die ersten $a_i$ Subwürfel des Subwürfels $a_{i-1}+ 1$ der i-ten Stufe zu der *Area A* gehören.

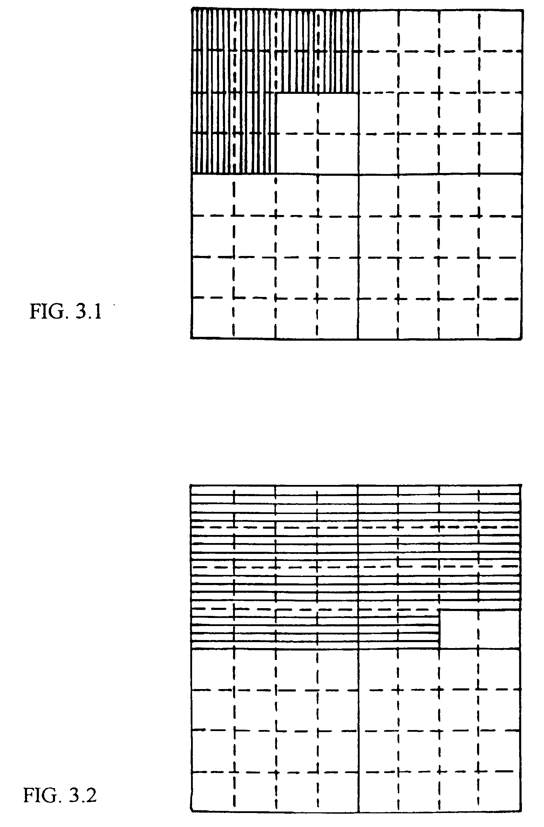

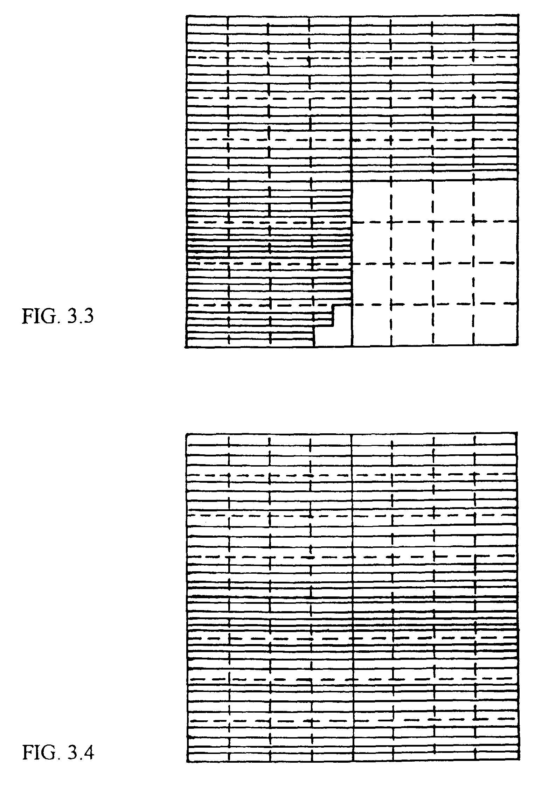

Eine auf diese Weise definierte *Area A* ist eindeutig beschrieben durch die Folge von Zahlen $a_1\ a_2\ a_3 ... a_i$. Diese Zahlenfolge wird die eindeutige *Adresse alpha(A)* der *Area A* genannt. Dies ist anhand der Figg. 3.1 bis 3.4 für den 2-dimensionalen Fall, also n=2, veranschaulicht.

Fig. 3.1 zeigt einen 2-dimensionalen Würfel, der in vier gleichgroße Subwürfel unterteilt ist, die jeweils wiederum zweimal unterteilt sind. Die in der Fig. 3.1 grau unterlegte Fläche bildet eine *Area A,* welche die Adresse *alpha (A) = 03* hat, weil der erste 2-dimensionale Subwürfel auf der Stufe 1 nicht vollständig zu *A* gehört, was durch die Ziffer *0* an der ersten Stelle der Adresse angegeben ist. Von diesem Subwürfel gehören dann aber die ersten 3 Subwürfel der Stufe 2 zu *A,* was durch die Ziffer 3 an der zweiten Stelle der Adresse angegeben wird.

Fig. 3.2 zeigt den Würfel der Fig. 3.1 mit einer anderen grau unterlegten Fläche, die die *Area B* bildet Diese hat die Adresse *alpha(B) = 132,* da der erste Subwürfel komplett in der *Area B* enthalten ist (Ziffer *1* an der ersten Stelle), von dem zweiten Subwürfel jedoch nur die ersten drei Subwürfel der Stufe 2 enthalten sind (Ziffer *3* an der zweiten Stelle) und von dem vierten Subwürfel der Stufe 2 wiederum nur die ersten beiden Subwürfel der Stufe 3 enthalten sind (Ziffer *2* an der dritten Stelle).

Fig. 3.3 zeigt wiederum den 2-dimensionalen Subwürfel der Figg. 3.1 und 3.2 mit einer unterschiedlichen grau unterlegten Fläche, die die *Area C* bildet, welche die Adresse *alpha(C) - 2331* hat.

In Fig. 3.4 bildet der gesamte (grau unterlegte) 2-dimensionale Würfel eine *Area D* mit der Adresse *alpha(D) = 4.* Diesem Spezialfall wird als Adresse beispielsweise *epsilon* zugeordnet *(alpha (D) Epsilon).*

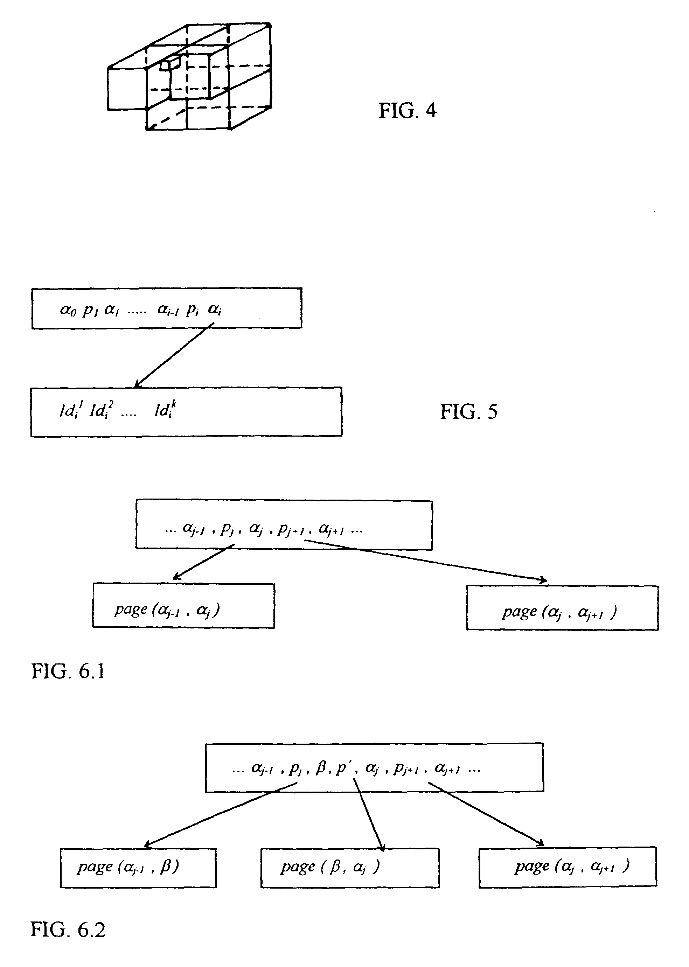

Zur weiteren Veranschaulichung der Adreßzuweisung ist in Fig. 4 ein eine *Area E* bildender Ausschnitt aus einem 3-dimensionalen Datenbestands-Würfel dargestellt, der die Adresse *alpha(E) = 541* hat.

Die Subwürfel, die noch zu einer Area gehören, werden auf jeder Unterteilungsstufe exponentiell um den Faktor $2^n$ kleiner. Dadurch bleiben die Adressen sehr kurz. Bei einer Umsetzung beispielsweise einer Landkarte des Bundeslands Bayern hat eine Area, deren kleinster Subwürfel 8x8 Meter groß ist, eine Adresse von etwa 32 Bits Länge.

Die beschriebenen Areas sind streng linear nach ihrem mengentheoretischen Enthaltensein geordnet: Für eine Area A, die raummäßig in einer Area B enthalten ist, kann man schreiben:

*A enthalten in B*

Des weiteren sind die zu den Areas gehörigen Adressen lexikographisch wie Wörter über einem Alphabet geordnet. Ist beispielsweise eine Adresse $\alpha$ kleiner als Adresse $\beta$, dann kann die bezeichnet werden durch

$\alpha << \beta$.

So gilt beispielsweise

*132 << 2331* und *2331 << 32*

Die vorstehend beschriebenen Areas und Adressen sind nun so aufgebaut, daß folgender Zusammenhang gilt:

*Area ($\alpha$) enthalten in Area* ($\beta$) genau dann wenn $\alpha << \beta$.

Da die Areas wie erläutert linear geordnet sind, kann immer die Differenz zwischen der größeren und der kleineren Area gebildet werden. Ist die Adresse $\alpha$ kleiner als die Adresse $\beta$, also $\alpha << \beta$, dann wird eine Region *reg* $(\alpha, \beta)$ als die Differenz zwischen *Area($\beta$)* und *Area($\alpha$)* definieit. Dies ist gleichbedeutend mit:

$$reg(\alpha,\ \beta) = Area(\beta) - Area\ (\alpha)$$

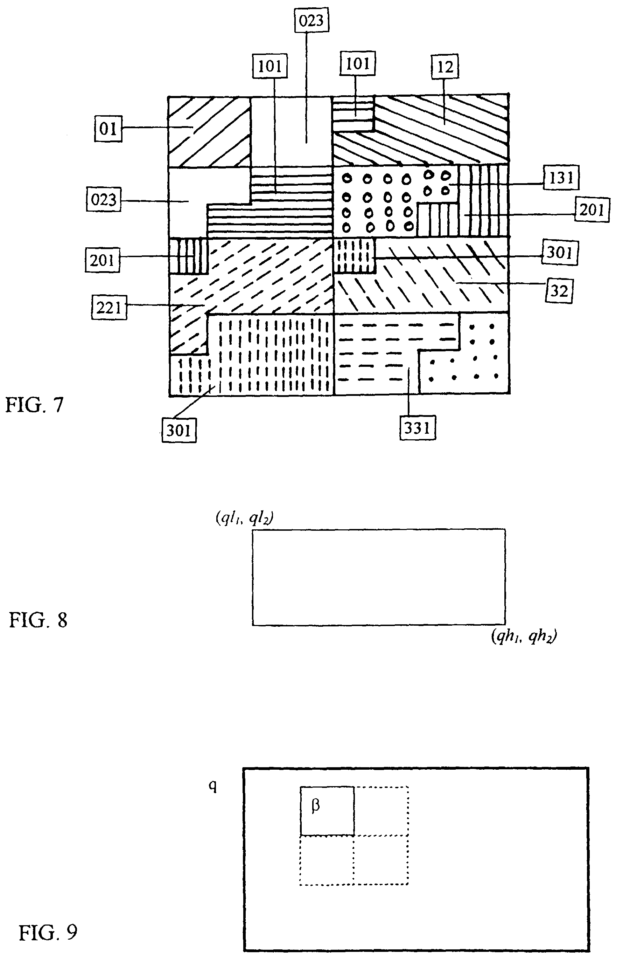

Regionen haben die Eigenschaft, daß sie im gegebenen n-dimensionalen Raum nach sehr speziellen Mustern geclustert sind. Fig. 7 zeigt ein Beispiel einer derartigen Clusterung eines 2-dimensionalen Würfels in mehrere Regionen. So umfaßt die erste, mit *01* bezeichnete Region exakt den ersten Subwürfel des ersten Subwürfels des Gesamtwürfels. Die zweite Region, mit *023* bezeichnet, umfaßt den kompletten zweiten Subwürfel des ersten Subwürfels und die drei ersten Subwürfel des folgenden dritten Subwürfels. In der Fig. 7 ist diese Region weiß dargestellt. Die Region beginnt somit nach dem Subwürfel mit der Adresse *01* und endet mit dem Subwürfel der Adresse *023.* Durch die Angabe dieser beiden Adressen ist somit gemäß der vorstehend erläuterten Vorschrift, nämlich *reg(01, 023) = Area (023) - Area (01),* eindeutig definiert.

## EP 0 912 952 B1

Die weiteren in dem Subwürfel der Fig. 7 eingezeichneten Regionen werden entsprechend unter Verwendung der in den einzelnen Regionen angegebenen Adressen gebildet. Dabei kann es durchaus vorkommen, daß Subwürfel, die eine zusammenhängende Region bilden, aufgrund der Numerierungs- und Darstellungsweise als nicht zusammenhängend erscheinen. Dies ist genau dann der Fall, wenn eine Region sich aus Subwürfeln zusammensetzt, bei denen in der Numerierung ein Sprung von 2 nach 3 oder von 4 nach 1 vorliegt. In der Fig. 7 ist dies beispielsweise bei der schon erläuterten weiß eingezeichneten Region *reg(01, 023)* der Fall, da dort der Subwürfel *02* und Teile des Subwürfels *03* eine Region bilden, durch den Übergang der Numerierung von *02* nach *03* jedoch in der Darstellung ein Sprung vorliegt. Dies ist u.a. auch in der sich an die Region *reg(01, 023)* anschließenden Region *reg(023, 101)* der Fall, die sich von dem Subwürfel *04* in den Subwürfel *11* erstreckt.

Die beschriebenen Regionen eines n-dimensionalen Würfels spielen eine zentrale Rolle bei der Speicherung von Objekten auf einem insbesondere peripheren Computerspeicher. Diese Speicher sind unterteilt in sogenannte Seiten, deren Inhalt bei einem Ein/Ausgabevorgang mit einem Speicherzugriff in den Arbeitsspeicher des Rechners geholt bzw. von dort wieder in den peripheren Computerspeicher zurückgeschrieben wird. Die Regionen werden im folgenden so konstruiert, daß die abzuspeichernden Datenobjekte, die in einer Region liegen bzw. sie schneiden, auf einer Seite des peripheren Computerspeichers gespeichert werden können. Die zur Region *reg(α, β)* zugehörige Speicherseite kann beispielsweise mit *page (α,β )* bezeichnet werden.

Bei allen Computeranwendungen spielt die Auflösung des Raumes, d.h. die kleinsten noch unterscheidbaren Raumelemente eine wesentliche Rolle. Sie werden im 2-dimensionalen Fall auch *pixel* (für picture element) und im n-dimensionalen Fall *voxel* (für volume element) genannt. Die Anzahl der Elemente, die pro Dimension unterschieden werden können, kann mit *pix* bezeichnet werden. Sind $(x_1, x_2, ... x_n)$ die kartesischen Koordinaten eines Punkts im n-dimensionalen Raum, dann gilt $0 < = x_i < pix$ für $i = 1, 2, ..., n$.

Die Area, deren letzter Subwürfel gerade der Punkt $(x_1, x_2, ... x_n)$ ist, ist eindeutig definiert und hat eine bestimmte Adresse, die sich aus $(x_1, x_2,... x_n)$ leicht und eindeutig berechnen läßt. Wir bezeichnen diese Funktion bzw. Berechnungsvorschrift mit *alpha* $(x_1, x_2, ... x_n)$. Umgekehrt lassen sich aus der Adresse $\alpha$ einer Area die kartesischen Koordinaten des letzten Punktes berechnen, der noch zu dieser Area gehört. Wir bezeichnen diese Funktion mit *cart* $(\alpha)$. *alpha* und *cart* sind inverse Funktionen zueinander, d.h. es gilt:

*cart (alpha* $(x_1, x_2, ... x_n)) = (x_1, x_2, ... x_n)$

*alpha (cart* $(\alpha)) = \alpha$ .

Wie beschrieben wird bei der erfindungsgemäßen Datenverwaltung ein n-dimensionaler Raum in Form eines Würfels durch eine Menge von Areas vollständig in Regionen partitioniert, wobei die Adressen der Areas lexikographisch sortiert werden und eine Region gerade durch die Differenz zweier aufeinanderfolgender Areas bzw. durch deren Adressen definiert wird. Die kleinst mögliche Area ist das kleinste Pixel des "Datenuniversums" und hat die Adresse *00...01.* Diese Adresse wird hier mit *sigma* bezeichnet. Die größte Adresse ist *4* im 2-dimensionalen Fall und $2^n$ im n-dimensionalen Fall und wird hier, wie vorstehend schon ausgeführt, mit *epsilon* bezeichnet.

Die sortierten Adressen der Areas werden erfindungsgemäß in einem konventionellen B-Baum, B*-Baum oder Präfix-B-Baum abgelegt. Vorteilhafterweise wird im B-Baum zwischen zwei aufeinanderfolgenden Adressen $\alpha_{i-1}$ und $\alpha_i$, welche genau die Region *reg* $(\alpha_{i-1}, \alpha_i)$ definieren, ein Zeiger (auch Pointer oder Verweis genannt) auf diejenige Seite des peripheren Speichers abgelegt, auf der die Datenobjekte der Region *reg* $(\alpha_{i-1}, \alpha_i)$ gespeichert sind. Dieser Zeiger wird mit $p_i$ bezeichnet.

Fig. 5 veranschaulicht eine derartige Abspeicherung, wobei in der in der Darstellung der Fig. 5 oberen Ebene alternierend jeweils eine Adresse und ein Zeiger abgespeichert sind. Durch die beiden jeweils einem Zeiger zugeordneten Adressen sind die Grenzen einer Region gegeben, auf deren Datenobjekte der zwischen den beiden Adressen stehende Zeiger verweist. So zeigt im Beispiel der Fig. 5 der Zeiger $p_i$ durch den eingezeichneten Pfeil auf eine Speicherseite, in welcher die Datenobjekte (hier die Identifikatoren der Datenobjekte) der durch die jeweils links und rechts des Zeigers stehenden Adressen gebildete Region *reg* $(\alpha_{i-1}, \alpha_i)$ liegen.

Der hier beschriebene Fall betrifft einen B*-Baum für Adressen, bei dem die Zeiger $p_i$ auf sogenannte Blattseiten zeigen. Auf diesen Blattseiten stehen dann die Datenobjekte selbst oder deren Identifikatoren, wobei dann die Datenobjekte selbst noch einmal auf weitere Seiten ausgelagert sind und über ihre Identifikatoren im penpheren Speicher gefunden werden können.

Die vorstehend beschriebene erfindungsgemäße Datenstruktur wird im folgenden als FB-Baum bezeichnet.

Nachfolgend wird das erfindungsgemäße Verfahren am Beispiel der Verwaltung von Punktobjekten im n-dimensionalen Raum beschrieben. Ein Punktobjekt P ist durch seine kartesischen Koordinaten $(x_1, x_2, ... x_n)$ gegeben. Daraus wird die Adresse $\beta = alpha (x_1, x_2, ... x_n )$ berechnet. Der Punkt P liegt in der eindeutig definierten Region *reg* $(\alpha_{j-1}, \alpha_j)$ mit der Eigenschaft, daß

$\alpha_{j-1} << \beta << = \alpha_j.$

Diese Region wird durch eine Baumsuche im FB-Baum bestimmt, wo der Verweis $p_j$ auf die Seite *page* $(\alpha_{j-1}, \alpha_j)$ gefunden wird. Der Punkt P, d.h. sein Identifikator zusammen mit seinen Koordinaten $(x_1, x_2, ... x_n)$ wird dann auf der Seite *page* $(\alpha_{j-1} , \alpha_j)$ des Peripheriespeichers abgespeichert. Alternativ dazu kann nur der Identifikator des Punktes

*aufpage* $(\alpha_{j-1}, \alpha_j)$ gespeichert werden und der Punkt selbst, d.h. seine Koordinaten und sonstige Informationen über ihn, wird nochmals auf eine andere Seite ausgelagert.

Die Seiten des peripheren Speichers haben nur eine bestimmte vorgegebene Speicherkapazität und können deshalb nur eine bestimmte Anzahl *M* von Objekten aufnehmen. Sobald in eine Region weitere Objekte eingefügt werden sollen, die zur Region gehörende Seite aber keine Objekte mehr aufnehmen kann, muß der Inhalt der Seite auf zwei Seiten aufgeteilt werden, und die Region muß dementsprechend in zwei Regionen gespalten werden.

Nachfolgend wir zunächst die Spaltung der Region beschrieben: Sei die Region *reg* $(\alpha_{j-1}, \alpha_j)$ und die zugehörige Seite *page* $(\alpha_{j-1}, \alpha_j)$. Wegen der Definition einer Region gilt dann: $\alpha_{j-1} << \alpha_j$. Jetzt wird eine Spaltadresse β gewählt mit der Eigenschaft, daß β zwischen den beiden Area-Adressen $\alpha_{j-1}$ und $\alpha_j$ liegt und die Region *reg* $(\alpha_{j-1}, \alpha_j)$ etwa in der Mitte spaltet, d.h. daß etwa die Hälfte der Objekte in der Region *reg* $(\alpha_{j-1}, \beta)$, die andere Hälfte in der Region *reg* $(\beta, \alpha_j)$ zu liegen kommen. Dann enthalten die beiden Regionen *reg* $(\alpha_{j-1}, \beta)$ und *reg* $(\beta, \alpha_j)$ jeweils weniger als ½ *M* + *eps* Objekte, wobei *eps* eine kleine vorgegebene Zahl ist und z.B. etwa *1/10* von *M* sein könnte.

Anschließend werden die Objekte von der Seite *page* $(\alpha_{j-1}, \alpha_j)$ auf die beiden Seiten *page* $(\alpha_{j-1}, \beta)$ und *page* $(\beta, \alpha_j)$ aufgeteilt, wobei eine der beiden Seiten mit der ursprünglichen Seite *page* $(\alpha_{j-1}, \alpha_j)$ identisch sein kann.

Bei der Spaltung der Region *reg* $(\alpha_{j-1}, \alpha_j)$ wird dabei die aus den Figg. 6.1 und 6.2 ersichtliche Modifikation des FB-Baums durchgeführt. Fig. 6.1 zeigt die Ausgangsstruktur des FB-Baums mit einer in der Zeichnungsdarstellung oberen Ebene, die die abgespeicherten Adressen $\alpha_{j-1}$, $\alpha_j$ und $\alpha_{j+1}$ sowie die zwischen diesen Adressen liegenden Zeiger $p_j$ und $p_{j+1}$ enthält. Dabei verweist der Zeiger $p_j$ auf die Seite *page* $(\alpha_{j-1}, \alpha_j)$ und der Zeiger $p_{j+1}$ auf die Seite *page* $(\alpha_j, \alpha_{j+1})$. Nach der Spaltung der Seite *page* $(\alpha_{j-1}, \alpha_j)$ liegt die aus der Fig. 6.2 ersichtliche Baumstruktur vor, wobei in der in der Zeichnungsdarstellung oberen Ebene zwischen dem Zeiger $p_j$ und der Adresse $\alpha_j$ die der Spaltadresse entsprechende Adresse β und der auf die neue Speicherseite *page* $(\beta, \alpha_j)$ verweisende Zeiger *p'* eingefügt wurden. Der bisherige Zeiger $p_j$ verweist nunmehr auf die modifizierte Seite *page* $(\alpha_{j-1}, \beta)$ und der Zeiger $p_{j+1}$ verweist unverändert auf die ebenfalls unveränderte Seite *page* $(\alpha_j, \alpha_{j+1})$.

Durch die Einfügung von β und *p'* in den übergeordneten Knoten muß möglicherweise die übergeordnete Seite ebenfalls gespalten werden, wenn dort durch diese Einfügung zuviel Adreß- und Zeigerdaten vorhanden sind. Diese Spaltvorgänge verlaufen dann aber genau wie bei den aus dem Stand der Technik bekannten B-Bäumen üblich. Durch diese wiederholten Spaltvorgänge beim Einfügen von Objekten in das vorhandene Datenuniversum entstehen die FB-Bäume, die ein ganz ähnliches Wachstum zeigen wie die bekannten B-Bäume.

Zur weiteren Erläuterung des Verfahrens wird nachfolgend die Löschung von Datenobjekten aus dem vorhandenen Datenuniversum und eine Anpassung der Regionen nach erfolgter Löschung beschrieben.

Soll ein Punkt-Objekt $(x_1, x_2, ... x_n)$ wieder gelöscht werden, so werden zunächst wie beim Einfügevorgang die Region, in der der Punkt liegt, und die zugehörige Speicherseite bestimmt. Der Punkt wird von der Seite gelöscht und verschwindet somit auch aus der Region. Sinkt dadurch die Anzahl der Objekte in der Seite unter ½ *M* - *eps,* so wird die Region mit einer der beiden Nachbarregionen verschmolzen. Wenn die so entstehende Region zu viele Objekte enthält, wird sie wieder wie schon vorher beschrieben in der Mitte gespalten.

Beispielhaft könnte die Region *reg* $(\alpha_{j-1}, \alpha_j)$, falls sie nach einem Löschvorgang zu wenige Objekte enthält, mit der Region *reg* $(\alpha_j, \alpha_{j+1})$ verschmolzen werden zur Region *reg* $(\alpha_{j-1}, \alpha_{j+1})$. Falls *reg* $(\alpha_{j-1}, \alpha_{j+1})$ dann zu viele Objekte enthält, wird sie wieder gespalten in *reg* $(\alpha_{j-1}, \beta)$ und *reg* $(\beta, \alpha_{j+1})$ wobei natürlich β geeignet gewählt wird und gelten muß

$$\alpha_{j-1} << \beta << \alpha_{j+1}$$

wobei außerdem $\alpha_j << \beta$ sein wird, damit mehr Objekte in der ersten Region zu liegen kommen. Beim Löschen eines Objektes aus der Region *reg* $(\alpha_{j-1}, \alpha_j)$ ergeben sich somit die folgenden 3 Fälle:

**Fall 1**: *reg* $(\alpha_{j-1}, \alpha_j)$ hat nach dem Löschen noch mindestens *1/2M* - *eps* Objekte. Dann bleiben die Region und die zugehörige Seite erhalten.

**Fall 2**: *reg* $(\alpha_{j-1}, \alpha_j)$ kann mit einer der beiden Nachbarregionen *reg* $(\alpha_{j-2}, \alpha_{j-1})$ oder *reg* $(\alpha_j, \alpha_{j+1})$ verschmolzen werden zu der neuen Region *reg* $(\alpha_{j-2}, \alpha_j)$ bzw. reg $(\alpha_{j-1}, \alpha_{j+1})$.

**Fall 3**: Die Region reg $(\alpha_{j-1}, \alpha_j)$ wird wie im Fall 2 zunächst mit einer Nachbarregion verschmolzen, muß aber anschließend wieder gespalten werden und es entstehen die beiden Regionen *reg* $(\alpha_{j-2}, \beta)$ und *reg* $(\beta, \alpha_j)$ bzw. reg $(\alpha_{j-1}, \beta)$ und *reg* $(\beta, \alpha_{j+1})$.

Durch solche Löschvorgänge können benachbarte Regionen irgendwann wieder endgültig verschmolzen werden, so daß der FB-Baum wieder schrumpft und genau das umgekehrte Verhalten zeigt wie beim Spalten von Regionen und Seiten und dem dadurch hervorgerufenen Wachstum. Sind schließlich alle Objekte aus dem Universum gelöscht, so ist der FB-Baum wieder leer geworden.

Zur weiteren Erläuterung des erfindungsgemäßen Verfahrens wird nachfolgend die Beantwortung von Punktanfragen erläutert.

Bei einer Punktanfrage werden die kartesischen Koordinaten $(y_1,..., y_n)$ des gesuchten Punktes $P$ angegeben, über den dann Zusatzinformationen wie beispielsweise Höhe oder Temperatur oder Börsenwert oder dergleichen in Erfahrung gebracht werden sollen. Diese Zusatzinformationen sind mit dem Punktobjekt selbst abgespeichert.

Zunächst wird aus den gegebenen kartesischen Koordinaten $(y_1, ..., y_n)$ die Adresse $pp$ des Punktes $P$ berechnet. Der Punkt liegt in der eindeutig bestimmten Region reg $(\alpha_{i-1}, \alpha_i)$ mit der Eigenschaft

$\alpha_{i-1} << pp << = \alpha_i.$

Diese Region und die zu dieser Region gehörende Seite page $(\alpha_{i-1}, \alpha_i)$ wird mittels einer Suche im FB-Baum und über den dort abgelegten Zeiger $p_i$ gefunden und geholt. Auf der Seite page $(\alpha_{i-1}, \alpha_i)$ befindet sich dann die vollständige gewünschte Information über den Punkt $P$ (und natürlich über weitere Punkte und Objekte, die zu dieser Region gehören).

Da ein erfindungsgemäßer FB-Baum genau wie ein B-Baum bzgl. der Höhe balanciert ist, kann die Baumsuche und somit das Auffinden des Punktes $P$ in einer Zeit $O (log_k N)$ durchgeführt werden.

Eine fundamentale Anfrageart bei allen Datenbanksystemen sind sogenannte *Bereichsanfragen,* bei welchen bezüglich jeder Dimension ein Intervall vorgegeben wird. Keine Intervallangabe bezüglich einer Dimension wird dabei als das Intervall (- *unendlich , + unendlich)* betrachtet. Durch das Produkt dieser Intervalle wird ein n-dimensionaler Quader bestimmt, der den Anfragebereich darstellt. Im folgenden wird dieser Anfragebereich Query-Box q genannt.

Fig. 8 zeigt beispielhaft eine Query-Box q für den 2-dimensionalen Fall, in welchem der n-dimensionale Quader ein Rechteck ist. Der in der Fig. 8 dargestellte Anfragebereich der Query-Box q ist gegeben durch die Werte $(ql_1, ql_2)$ für den niedrigsten Wert (1 für low) und $(qh_1, qh_2)$ für den höchsten Punkt (h für high).

Die Antwort auf eine Bereichsanfrage ist die Menge derjenigen Punkte oder Objekte, die in der Query-Box q liegen oder diese schneiden.

Im allgemeinen n-dimensionalen Fall ist die Query-Box gegeben durch die 2*n Werte $ql_i$ und $qh_i$ mit $i = 1, 2, ..., n,$ wobei natürlich gemäß vorstehend erläutertem Beispiel der Fig. 8 $ql_i < qh_i$ gilt (für den Fall $ql_i = qh_i$ für alle i ergibt sich der Spezialfall der Punktanfrage, der schon behandelt wurde).

Der kleinste Punkt der Query-Box q hat somit die kartesischen Koordinaten $(ql_1, ql_2,..., ql_n)$ und liegt in einer genau definierten Region reg $(\alpha_{j-1}, \alpha_j)$. Zum Auffinden dieser Region wird zunächst die Adresse

$\lambda = alpha (ql_1, ql_2,..., ql_n)$

des kleinsten Punktes von q berechnet. Dabei handelt es sich um hauptspeicherinterne Berechnungen, die keine Zugriffe zu peripheren Speichern erfordern. Der Rechenaufwand ist aus diesem Grunde vernachlässigbar klein.

Dann wird die Region reg $(\alpha_{j-1}, \alpha_j)$ mit der Eigenschaft

$\alpha_{j-1} << \lambda << = \alpha_j$

bestimmt. Das erfordert eine Suche im FB-Baum mit einem Aufwand $O (log_k N)$. Dabei können auch $O(log, N)$ Plattenzugriffe erforderlich werden. Die letzte Seite dieser Baumsuche ist dic Seite page $(\alpha_{j-1}, \alpha_j)$, die die Identifikatoren aller Datenobjekte bzw. die vollständigen Datenobjekte selbst enthält, die in der Region reg $(\alpha_{j-1}, \alpha_j)$ liegen oder diese Region schneiden. Für diese Datenobjekte wird nun einzeln bestimmt, ob sie die Query-Box q schneiden oder nicht. Es ist zu beachten, daß die Datenobjekte q nur schneiden können, wenn ihre zugehörige Region die Query-Box q schneidet (hierbei handelt es sich um eine notwendige, aber nicht hinreichende Bedingung). So wird zunächst ein Teil der Datenobjekte in der Query-Box q gefunden.

Die gefundene Region reg $(\alpha_{j-1}, \alpha_j)$ ist wie vorstehend beschrieben aus Subwürfeln aufgebaut, deren Adressen geordnet sind. Als Beispiel soll hier die Region reg (023, 101) aus Fig. 7 dienen, die aus den Würfeln 024, 04, 101 in dieser Reihenfolge besteht. Wenn eine Region den Anfragebereich schneidet, müssen natürlich nicht alle Subwürfel dieser Region den Anfragebereich ebenfalls schneiden.

Die Adresse des letzten Subwürfels der Region reg $(\alpha_{j-1}, \alpha_j)$, der den Anfragebereich schneidet, sei β. Außerdem habe β die Form β'*l*, wobei *l* der Index von β auf der Stufe ist, auf der sich β befindet. Beispielsweise gilt für den Würfel *024* der Region *reg (023 , 101)* der Fig. 7:

für 024 auf der Stufe 3 ist *l = 4*.

β = 024 läßt sich somit in der Form β'*l* mit β' = 02 und *l = 4* darstellen, wobei die Anzahl der Ziffern in der Adreßdarstellung die Stufe wiedergibt.

Dasselbe gilt für die weiteren in der genannten Region reg *(023, 101)* vorhandenen Würfel 04 und 101:

für *04* auf der Stufe 2 ist *l = 4*

für *101* auf der Stufe 3 ist *l = 1*.

Es ist zu beachten, daß *l = 0* nicht vorkommen kann, da nach der erfindungsgemäßen Konstruktion der Adressen keine Adresse mit 0 endet.

Nachdem die Region reg $(\alpha_{j-1}, \alpha_j)$ wie vorstehend beschrieben bei der Bereichsanfrage abgearbeitet ist, muß nun die nächste Region gefunden werden, die den Anfragebereich schneidet. Dazu wird die Lage von Würfel β im Bezug zu der Query-Box q und zu seinem übergeordneten Würfel, in dem β selbst enthalten ist, betrachtet. Dies ist beispielhaft in der Darstellung der Fig. 9 gezeigt, in welcher die Query-Box q der Fig. 8 mit darin liegendem Würfel β dargestellt ist, wobei die weiteren Würfel, die zu dem übergeordneten Würfel des Würfels β gehören, punktiert eingezeichnet sind. Diese punktiert eingezeichneten Subwürfel der gleichen Stufe, die zu einem selben übergeordneten Würfel gehören, werden hier als Brüder bezeichnet. Alle Subwürfel der Stufe *s* eines übergeordneten Würfels der Stufe *s-l* sind somit Brüder. Ein Subwürfel der gleichen Stufe *s* mit einem kleineren Index *l* ist damit ein *kleinerer Bruder,* ein Subwürfel derselben Stufe *s* mit einem größeren Index *l* dabei ein *größerer Bruder.* In dem in Fig. 7 dargestellten Beispiel ist der große Bruder des Subwürfels *023* der Subwürfel *024,* wobei diese beiden Brüder nicht in derselben Region liegen.

Bei der Weiterführung der Bereichsanfrage sind somit die nächsten Datenobjekte, die bisher in der schon abgearbeiteten Region *reg ($\alpha_{j-1}$, $\alpha_j$)* noch nicht gefunden wurden und in der Query-Box q liegen, in einem größeren Bruder von $\beta$ oder im Vater von $\beta$ oder in einem anderen Vorfahren von $\beta$ enthalten.

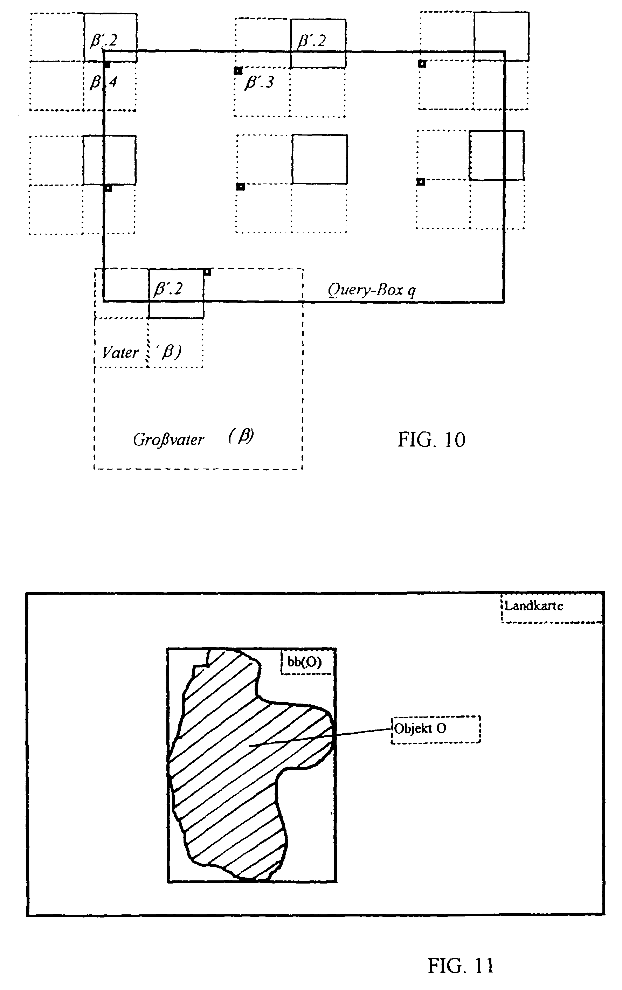

Fig. 10 zeigt beispielhaft einige mögliche Situationen für einen Würfel $\beta$ der Form $\beta'2$ für den 2-dimensionalen Fall.

Falls sich kein größerer Bruder des Würfels $\beta$ mit der Queiy-Box q schneidet (letzter Fall in Fig. 10), dann enthält auch der Vater des Würfels $\beta$ keine Objekte mehr, die noch nicht gefunden sind (durch vorherige Abarbeitung der kleineren Brüder), aber in der Query-Box q liegen könnten. Es müssen deshalb die größeren Brüder des Vaters des Würfels $\beta$ dahingehend untersucht werden, ob sie die Query-Box q schneiden. Falls nicht, muß nach einer analogen Überlegung zum Großvater des Würfels $\beta$ übergegangen und dessen größere Brüder auf Überschneidung mit der Query-Box q geprüft werden, etc. Auf diese Weise wird schließlich das ganze Datenuniversum abgedeckt und alle Objekte in der Query-Box q werden gefunden.

Man beachte: Wenn sich der Würfel $\beta$ auf der Stufe *s* befindet, dann können wir höchstens *s-mal* zum Vater übergehen und jeweils die größeren Brüder (davon gibt es höchstens $2^n-1$) auf Überschneidung mit der Query-Box q prüfen. Außerdem ist *s < = ld (pix)* und beim Übergang zum Vaterknoten sowie bei der Prüfung der Überschneidung der jeweils größeren Brüder mit der Query-Box q werden nur hauptspeicherinterne Berechnungen durchgeführt; es sind also keine Ein/ Ausgabevorgänge oder Plattenzugriffe nötig. Deshalb ist dieses Verfahren, den nächsten Würfel zu finden, der die Query-Box q schneidet, extrem schnell und kann in der Bilanz für die Gesamtzeit bei der Beantwortung einer Bereichsanfrage vernachlässigt werden.

Sobald nach diesem Verfahren der erste Würfel bestimmt wurde, der die Query-Box q schneidet, werden die kartesischen Koordinaten des kleinsten Pixels im Durchschnitt mit der Query-Box q (in Fig. 10 die kleinen schwarzen Quadrate) berechnet, die sich wie folgt ergeben:

Ein Würfel habe bzgl. Dimension i die Ausdehnung von $xl_i$ (kleinste Koordinate) bis $xh_i$ (größte Koordinate) in Anlehnung an die Bezeichnungen für die Werte *ql* bzw. *qh.*

Die Bedingung dafür, daß dieser Würfel die Query-Box q nicht schneidet, ist:

*es **existiert** i*: $xh_i < ql_i$ ***or*** $xl_i > qh_i$

Die Bedingung dafür, daß dieser Würfel die Query-Box q schneidet, ist die Negation obiger Formel:

***not** es **existiert i***: $xh_i < ql_i$ ***or*** $xl_i > qh_i$

bzw. nach den Gesetzen der mathematischen Logik:

***for all** i: $xh_i > = ql_i$ **and** $xl_i < = qh_i$*

Dann ergeben sich die Koordinaten des kleinsten Schnittpunktes *sp* mit der Query-Box q wie folgt bzgl. der i-ten Dimension:

*if $xl_i > = ql_i$ **then** $sp_i$ : = $xl_i$ **else** $sp_i$ := $ql_i$* Der Schnittpunkt *sp* hat dann die kartesischen Koordinaten

$sp = (sp_1, sp_2, ..., sp_n)$

und seine Adresse ist:

*sigma := alpha $(sp_1, sp_2, ..., sp_n)$*

Man beachte, daß bis zu diesem Schritt unser Verfahren zur Bestimmung von *sp* keine Ein/Ausgabevorgänge oder Plattenzugriffe benötigte.

Um die zu dem Schnittpunkt *sp* gehörende eindeutige Region zu finden, ist nun eine Punktanfrage erforderlich mit der Adresse *sigma,* genau wie sie oben schon beschrieben wurde. Sie erfordert einen Zeitaufwand von der Ordnung $O (\log_k N)$, wie oben ebenfalls schon analysiert wurde.

Daraus folgt nun aber, daß bei der Beantwortung einer Bereichsanfrage nur Bearbeitungskosten für diejenigen Regionen anfallen, die die Query-Box q tatsächlich schneiden. Für jede solche Region sind die Kosten von der Ordnung $O ( \log_k N)$, insgesamt also $r* O (\log_k N)$ Kosten, wenn *r* Regionen die Query-Box q schneiden.

Nachfolgend wird das Verfahren zur Beantwortung von Bereichsanfragen für eine n-dimensionale Query-Box q mit Koordinaten $ql_i$ und $qh_i$ für *i = 1,2, ... , n* angegeben:

**Initialize:**

$sigma := alpha (ql_1 , ql_2 ,..., ql_n ) ;$

**RegionLoop: begin** co für jede Region, die q schneidet **oc**
finde durch Baumsuche im FB-Baum die Region $reg ( \alpha_{j-1} , \alpha_j )$,
in der $sigma$ liegt, d.h. mit $\alpha_{j-1} << sigma <<= \alpha_j$ ;
hole Seite $page \ (\alpha_{j-1} , \alpha_j )$;

**ObjectLoop:** **begin** für alle Objekte $Q$ auf Seite $page \ (\alpha_{j-1} , \alpha_j )$
prüfe:
if $Q$ $intersects$ $q$ **then** Ausgabe von $Q$ als Teil der Antwort
**end ObjectLoop ;**

finde letzten Subcube mit Adresse $\beta$ von $reg (\alpha_{j-1} , \alpha_j )$,
so daß $Subcube \ (\beta)$ $intersects$ $q$;

**if** $(qh_1 , qh_2 ,..., qh_n )$ $contained$ $in$ $Subcube$ $(\beta)$ **then** co fertig oc **goto Exit**
**else**
**FatherLoop: begin** co $\beta$ habe die Form $\beta = \beta'.i$ **oc**
$i := tail (\beta) ;$

**BrotherLoop: for** $k := i+1$ **to** $2^n$
**do if** $Subcube \ (\beta'.k)$ $intersects$ $q$ **then**
**begin** $sp :=$ $smallest$ $intersection$ $with$ $q$;
$sigma := alpha ( sp );$
**goto RegionLoop**
co Schleife wird hier sicher verlassen,
weil q noch nicht abgearbeitet ist oc
**end**
**od** co für alle größeren Brüder von $\beta$ ist Durchschnitt mit q
leer **oc ;**

$\beta := father (\beta);$
**goto FatherLoop**
**end FatherLoop;**

**end RegionLoop ;**
**Exit: co** Ende des Programms **oc**

Nachfolgend wird das erfindungsgemäße Verfahren beispielhaft anhand der Verwaltung von allgemeinen ausgedehnten Objekten beschrieben.

Ein allgemeines ausgedehntes Objekt ist ein wichtiger Fall eines Datenobjekts. Dabei handelt es sich beispielsweise um einen See in einer geographischen Karte, wie er in Fig. 11 dargestellt ist.

Das ausgedehnte Objekt O wird zuerst durch einen der Dimension entsprechenden achsenparallelen Quader umgeben, der in seinen Abmessungen so klein gewählt wird, daß er das ausgedehnte Objekt gerade umgibt. In dem Beispiel der Fig. 11 ist dies an dem dort abgebildeten See und einem den See gerade umgebenden 2-dimensionalen Quader bb ( = Rechteck) dargestellt. In der Fachliteratur wird der das ausgedehnte Objekt umgebende Quader als *Bounding Box* bezeichnet.

Für ein ausgedehntes Objekt wird im FB-Baum lediglich der Identifikator Id(O) abgespeichert, wobei diese Abspeicherung des Identifikators im allgemeinen sogar mehrfach erfolgt, nämlich für jede Region, die das ausgedehnte Objekt schneidet. Das ausgedehnte Objekt selbst ist aus dem FB-Baum in einen anderen Speicherbereich oder in eine Datenbank ausgelagert.

Die Bounding Box für ein ausgedehntes Objekt O wird hier mit bb(O) bezeichnet. Der Identifikator Id(O) für das ausgedehnte Objekt O wird nun in dem FB-Baum mit jeder Region gespeichert, die das ausgedehnte Objekt O schneidet. Dabei ist zu beachten, daß das ausgedehnte Objekt O nur diejenigen Regionen schneiden kann, die auch von der Bounding Box bb geschnitten werden. Dies ist eine notwendige, jedoch keine hinreichende Bedingung, die eingesetzt wird, um die Algorithmen zur Umsetzung des erfindungsgemäßen Verfahrens wesentlich zu beschleunigen.

Beim Einfügen eines allgemeinen ausgedehnten Objekts O wird zuerst die zugehörige Bounding Box bb(O) berechnet. Dann wird das folgende Verfahren ausgeführt:

**for all** Regionen R, die bb(O) schneiden **do**

    **if** R intersects O **then** füge Id(O) in R ein

        **co** dies kann natürlich zu einer, i.a. sogar zu mehreren Spaltungen von R führen **oc**

**Hinweis:** Um die Regionen R zu finden, die bb(O) schneiden, behandelt man bb(O) genau wie eine Query Box q. Das führt zu folgendem detaillierten Verfahren:

**Initialize:**

berechne bb(O);

$q := bb(O)$;

$sigma := alpha\ (ql_1,\ ql_2,...,\ ql_n)$ ;

**RegionLoop: begin co** für jede Region, die q schneidet **oc**

finde durch Baumsuche im FB-Baum die Region $reg\ (\alpha_{j-1},\ \alpha_j)$,

in der *sigma* liegt, d.h. mit $\alpha_{j-1} << sigma << = \alpha_j$ ;

hole Seite $page\ (\alpha_{j-1},\ \alpha_j)$;

**if** O *intersects* R **then** füge Id(O) in R ein, d.h.:

**if** Anzahl der Objekte, die R schneiden, ist <= M

**then** speichere Id(O) auf $page\ (\alpha_{j-1},\ \alpha_j)$

**else** spalte R und $page\ (\alpha_{j-1},\ \alpha_j)$

wie vorstehend zum Spalten von Regionen und Seiten beschrieben;

finde letzten Subwürfel mit Adresse $\beta$ von $reg\ (\alpha_{j-1},\ \alpha_j)$,

so daß *Subcube (β) intersects q*;

**if** $(qh_1,\ qh_2,...,\ qh_n)$ *contained in Subcube (β)* **then co** fertig **oc goto Exit   else**

**Father Loop: begin co** $\beta$ habe die Form $\beta - \beta'.i$ **oc**

$i := tail\ (\beta)$ ;

**BrotherLoop: for** $k := i+1$ **to** $2^n$

**do if** *Subcube (β'.k) intersects q* **then**

**begin** *sp := smallest intersection with q;*

$sigma := alpha\ (sp)$;

**goto RegionLoop**

**co** Schleife wird hier sicher verlassen,

weil q noch nicht abgearbeitet ist **oc**

**end**

**od co** für alle größeren Brüder von $\beta$ ist Durchschnitt mit

q leer **oc** ;

$\beta := father\ (\beta)$;

**goto FatherLoop**

**end FatherLoop;**

**end RegionLoop** ;

**Exit: co** Ende des Programms **oc**

Zum Löschen eines ausgedehnten Objektes O wird wieder eine Bounding Box bb(O) verwendet, um alle Regionen zu finden, die O schneiden könnten. Der Identifikator Id(O) ist in den Regionen enthalten und auf den zugehörigen Seiten gespeichert, die das ausgedehnte Objekt O tatsächlich schneiden, und wird daraus gelöscht. Dabei kann es wieder zum Verschmelzen von Regionen und zugehörigen Seiten kommen, wie es vorstehend schon beschrieben wurde.

Das erfindungsgemäße Datenbanksystem und die erfindungsgemäßen Verfahren zur Verwaltung multidimensionaler Daten gestatten somit einen schnellen und sicheren Zugriff auf Daten eines multidimensionalen Datenbestands, wobei die erfindungsgemäße Datenstruktur insbesondere ein dynamisches Ergänzen oder Ändern des multidimensionalen Datenbestands erlaubt. Erfindungsgemäß ist lediglich die Modifikation eines einzelnen Baumes für das Einfügen bzw. Löschen von Objekten notwendig.

Bei der Beantwortung von Anfragen zeigt das erfindungsgemäße FB-Baum-Verfahren folgende Leistungscharakteristik: Wir nehmen dazu an, daß $p_i$% der Werte des Datenbestandes bezüglich der i-ten Dimension in dem Anfrageintervall $[ql_i : qh_i]$der Query-Box q liegen, dann liegen in der Query-Box q

$$(p_1\% * p_2\% * ... *p_n\%) *N$$

Objekte. Da nicht alle Regionen, die q schneiden, vollständig innerhalb von q liegen, sondern darüber hinausragen können, müssen i.a. mehr Objekte vom peripheren Speicher geholt werden, als in der Query-Box liegen. Im Mittel sind das aber weniger als zweimal soviel Objekte, wie in q liegen, d.h. $2 * (p_1\% * p_2\% * ... *p_n\%) *N$ Objekte.

Es liegt somit ein multiplikatives anstatt ein additives Verhalten (wie bei den aus dem Stand der Technik bekannten Verfahren) von Bruchteilen von N vor, was zu deutlichen Verbesserungen führt. Dies wird anhand eines einfachen Rechenbeispiels illustriert:

Seien $p_1 = 2\%$ $p_2 = 5\%,$ $p_3 = 4\%$ $p_4 = 10\%$
dann ist die *Summe der $p_i$ = 21% = $21*10^{-2}$*
und das *Produkt der $p_i$ = $400*10^{-8}$ = $4*10^{-6}$*

Wenn das gesamte betrachtete Datenuniversum 10.000.000 Objekte enthält - für typische Datenbankanwendungen ein realistisches, eher kleines Datenuniversum - dann müssen mit dem derzeitigen Stand der Technik 2.100.000 Objekte vom peripheren Speicher geholt werden, mit dem neuen Verfahren der FB-Bäume aber nur $2*10^7$ $*4*10^{-6}$ = 80 Objekte, eine Verbesserung etwa um den Faktor *2500* gegenüber dem bekannten Stand der Technik.

Selbstverständlich ist die vorliegende Erfindung nicht auf die beschriebenen Ausführungsformen beschränkt, sondern es sind andere Ausgestaltungen möglich, die im Bereich des fachmännischen Könnens liegen. So ist beispielsweise die Art und Weise der Numerierung der Subwürfel und der Aufbau der Adressen von Subwürfeln und Regionen auch auf andere Weise möglich, ohne daß der Bereich der Erfindung verlassen wird.

**Patentansprüche**

1. Datenbanksystem mit einer Recheneinrichtung, einem Hauptspeicher und einer insbesondere peripheren Speichereinrichtung, in dem zum Indizieren und Speichern eines in einem mehrdimensionalen Würfel liegenden Datenbestands auf Speicherseiten gegebener Speicherkapazität des insbesondere peripheren Speichermittels ein wiederholtes iteratives Unterteilen des mehrdimensionalen Würfels in allen Dimensionen in Subwürfel erfolgt bis aufeinanderfolgende Subwürfel zu Regionen zusammenfaßbar sind, die jeweils eine Menge von Datenobjekten beinhalten, die auf einer der Speicherseiten gegebener Speicherkapazität abspeicherbar sind.

2. Datenbanksystem nach Anspruch 1, in dem das Abspeichern der Datenobjekte einer Region auf einer Speicherseite gegebener Speicherkapazität unter Zuordnung eines Zeigers zu der Speicherseite und einer die Regionengrenzen bezeichnenden Adresse erfolgt.

3. Datenbanksystem nach Anspruch 2, in dem die Speicherung des Zeigers und der Adresse in einem B-Baum, B*-Baum oder Präfix-B-Baum erfolgt.

4. Datenbanksystem nach Anspruch 3, in dem die Speicherung der Datenobjekte in den Blattseiten des B-Baums, B*-Baums oder Präfix-B-Baums erfolgt.

5. Datenbanksystem nach einem der Ansprüche 2 bis 4, wobei die die Regionengrenzen bezeichnende Adresse aus Angaben über den letzten der die Region bildenden Subwürfel besteht.

6. Datenbanksystem nach Anspruch 5, in dem die Adresse Angaben über die Anzahl der auf jeder Unterteilungsstufe in der Region enthaltenen Subwürfel umfaßt.

7. Datenbanksystem nach einem der Ansprüche 5 oder 6, in dem die Adresse aus einer Abfolge von dem jeweils letzten auf der jeweiligen Unterteilungsstufe noch von der Region vollständig eingeschlossenen Subwürfel zugeordneten Nummern besteht.

8. Verfahren zum Verwalten eines n-dimensionalen Datenbestandes mit n > 1 auf Speicherseiten gegebener Speicherkapazität, insbesondere zum Betrieb eines Datenbanksystems nach einem der Ansprüche 1 bis 7, bei dem der in einem mehrdimensionalen Würfel liegende Datenbestand wiederholt iterativ in allen Dimensionen in Subwürfel unterteilt wird bis aufeinanderfolgende Subwürfel zu Regionen zusammenfaßbar sind, die jeweils eine Menge von Datenobjekten beinhalten, die auf einer der Speicherseiten gegebener Speicherkapazität abspeicherbar sind.

9. Verfahren nach Anspruch 8, wobei zum Indizieren und Speichern des Datenbestands auf Speicherseiten gegebener Speicherkapazität einer insbesondere peripheren Speichereinrichtung die folgenden Schritte ausgeführt werden:

   1) Bilden einer Ausgangsregion bestehend aus dem Gesamtwürfel,
   2) Zählen der in der Ausgangsregion vorhandenen Datenobjekte,
   3) Abspeichern der Datenobjekte der Ausgangsregion auf einer Speicherseite, falls die Anzahl der Datenobjekte der Ausgangsregion nicht größer ist als die der vorgegebenen Speicherkapazität einer Speicherseite entsprechende Zahl von Datenobjekten,
   4) andernfalls Auswählen einer Spaltadresse für die Ausgangsregion derart, daß durch Spalten der Ausgangsregion entlang der Spaltadresse eine erste und eine zweite Teilregion erzeugt werden, in welchen jeweils etwa die Hälfte der Datenobjekte der Ausgangsregion enthalten sind,
   5) Fortführen des Verfahrens ab Schritt 2. wobei die erste Teilregion die Rolle der Ausgangsregion übernimmt,
   6) Durchführen des Verfahrens ab Schritt 2, wobei die zweite Teilregion die Rolle der Ausgangsregion übernimmt,

   wobei die Schntte 5 und 6 jeweils solange wiederholt werden, bis die in Schntt 4 entstehenden Teilregionen jeweils eine Menge von Datenobjekten beinhalten, die auf einer der Speicherseiten gegebener Speicherkapazität abspeicherbar sind.

10. Verfahren nach Anspruch 9, wobei das Abspeichern gemäß Schritt 3 unter paralleler Abspeicherung einer der betreffenden Region zugeordneten Adresse sowie eines der Adresse zugeordneten und auf die Speicherseite, auf der die gemäß Schritt 3 abgespeicherten Datenobjekte enthalten sind, verweisenden Zeigers erfolgt.

11. Verfahren nach Anspruch 10, bei dem die Speicherung der Adresse und des Zeigers in einem B-Baum, B∗-Baum oder Präfix-B-Baum erfolgt, wobei durch aufeinanderfolgende Adressen jeweils Regionen definiert werden, deren Datenobjekte jeweils auf einer Speicherseite gegebener Speicherkapazität abgespeichert sind.

12. Verfahren nach Anspruch 8, wobei zum Einfügen von Datenobjekten in einen insbesondere nach einem Verfahren gemäß einem der Ansprüche 8 bis 11 in Regionen aufgeteilten und auf Speicherseiten gegebener Speicherkapazität einer insbesondere peripheren Speichereinrichtung abgespeicherten n-dimensionalen Datenbestand mit n>1 die folgenden Schritte durchgeführt werden:

   1) Bestimmen einer dem einzufügenden Datenobjekt zugehörenden Region des n-dimensionalen Datenbestands aus den Koordinaten des Datenobjekts im n-dimensionalen Raum,
   2) Auffinden der Speicherseite, auf der diese Region abgespeichert ist,
   3) Bestimmen der Anzahl der auf dieser Speicherseite gespeicherten Datenobjekte,
   4) Speichern des Datenobjekts auf dieser Speicherseite, falls die Anzahl der gespeicherten Datenobjekte kleiner ist als die der gegebenen Speicherkapazität der Speicherseite entsprechende Anzahl,
   5) andernfalls Auswählen einer Spaltadresse für die auf dieser Speicherseitc gespeicherte Region derart, daß durch Spalten der Region entlang der Spaltadresse eine erste und eine zweite Teilregion erzeugt werden, in welchen jeweils etwa die Hälfte der der gegebenen Speicherkapazität entsprechenden Anzahl an Datenobjekten enthalten ist,
   6) Einfügen des Datenobjekts in diejenige Teilregion, in der die Koordinaten des Datenobjekts liegen.
   7) Speichern der ersten und der zweiten Teilregion auf jeweils einer Speicherseite.

13. Verfahren nach Anspruch 12, bei dem das Auffinden der Speicherseite gemäß Schritt mittels in einem B-Baum, B*-Baum oder Präfix-B-Baum gespeicherter, den Speicherseiten zugeordneter Adressen und Zeiger erfolgt.

**14.** Verfahren nach Anspruch 13, bei dem das Speichern der ersten und der zweiten Teilregion gemäß Schritt 7 unter Ersetzung des Zeigers und der Adresse der Region aus Schritt 2 durch jeweils der ersten und der zweiten Teilregion zugeordnete Adressen und Zeiger erfolgt.

**15.** Verfahren nach Anspruch 14, bei dem die Speicherung der Adresse und des Zeigers in einem B-Baum, B*-Baum oder Präfix-B-Baum erfolgt, wobei durch aufeinanderfolgende Adressen jeweils Regionen definiert werden, deren Datenobjekte jeweils auf einer Speicherseite gegebener Speicherkapazität abgespeichert sind.

**16.** Verfahren nach Anspruch 8, wobei zum Löschen von Datenobjekten in einem insbesondere nach einem Verfahren gemäß einem der Ansprüche 8 bis 11 in Regionen aufgeteilten und auf Speicherseiten gegebener Speicherkapazität einer insbesondere peripheren Speichereinrichtung abgespeicherten n-dimensionalen Datenbestand die folgenden Schritte durchgeführt werden:

1) Bestimmen einer dem zu löschenden Datenobjekt zugehörigen Region des n-dimensionalen Datenbestands aus den Koordinaten des Datenobjekts im n-dimensionalen Raum,
2) Auffinden der Speicherseite, auf der diese Region abgespeichert ist,
3) Löschen des Datenobjekts auf dieser Speicherseite,
4) Bestimmen der Anzahl der auf dieser Speicherseite gespeicherten Datenobjekte,
5) Verschmelzen der Region mit einer ihrer beiden Nachbarregionen, falls die Anzahl der gespeicherten Datenobjekte kleiner ist als etwa die Hälfte der der gegebenen Speicherkapazität der Speicherseite entsprechenden Anzahl.
6) Bestimmen der Anzahl der in der durch das Verschmelzen neu entstandenen Region vorhandenen Datenobjekte,
7) Speichern der Region auf einer Speicherseite, falls die Anzahl der in der Region vorhandenen Datenobjekte nicht größer ist als die der gegebenen Speicherkapazität der Speicherseite entsprechende Anzahl,
8) andernfalls Auswählen einer Spaltadresse für die Region derart, daß durch Spalten entlang der Spaltadresse eine erste Teilregion und eine zweite Teilregion erzeugt werden, die jeweils etwa die Hälfte der gemäß Schritt 6 bestimmten Datenobjekte enthalten, und Speichern der Teilregionen auf jeweils einer Speicherseite.

**17.** Verfahren nach Anspruch 16, wobei das Auffinden der Speicherseite gemäß Schritt 2 mittels in einem B-Baum, B*-Baum oder Präfix-B-Baum gespeicherter, den Speicherseiten zugeordneter Adressen und Zeiger erfolgt.

**18.** Verfahren nach Anspruch 8, wobei zum Durchführen einer Datenanfrage auf der Grundlage eines gegebenen n-dimensionalen Anfragebereichs in einem insbesondere nach einem Verfahren gemäß einem der Ansprüche 8 bis 11 in aus Subwürfeln zusammengesetzte Regionen aufgeteilten und auf Speicherseiten gegebener Speicherkapazität einer insbesondere penpheren Speichereinrichtung abgespeicherten n-dimensionalen Datenbestand die folgenden Schritte durchgeführt werden:

1) Bestimmen der Koordinaten des niedrigsten und des höchsten Schnittpunktes des Anfragebereichs mit dem n-dimensionalen Datenbestand,
2) Bestimmen derjenigen Region, in welcher der niedrigste Schnittpunkt liegt und Auffinden der Speicherseite, auf der diese Region abgespeichert ist,
3) Ermitteln sämtlicher auf dieser Speicherseite abgespeicherter Datenobjekte, die eine Schnittmenge mit dem Anfragebereich bilden und Ausgabe der ermittelten Datenobjekte,
4) Bestimmen des in der Abfolge letzten Subwürfels der in Schritt 2 bestimmten Region. der den Anfragebereich schneidet,
5) Beenden der Datenanfrage, falls der höchste Schnittpunkt in diesem Subwürfel liegt,
6) andernfalls Ermitteln des nächsten Subwürfels derselben Ebene und desselben übergeordneten Würfels, der den Anfragebereich schneidet,
7) Bestimmen der Koordinaten des niedrigsten Schnittpunktes des Anfragebereichs mit dem ermittelten Subwürfel und Weiterführen des Verfahrens bei Schritt 2, falls in Schritt 6 ein Subwürfel ermittelt wurde,
8) andernfalls Ermitteln des nächsten Subwürfels der Ebene des übergeordneten Würfels aus Schritt 6, der den Anfragebereich schneidet und Durchführen von Schritt 6 mit den Subwürfeln des ermittelten Würfels,
9) Fortsetzen des Verfahrens mit Schritt 6, falls in Schritt 8 kein Subwürfel der Ebene des übergeordneten Würfels aus Schritt 6 ermittelt wurde, wobei der übergeordnete Würfel die Rolle des Subwürfels übernimmt.

**Claims**

1. A database system with a computing device, a main memory and an in particular peripheral memory device in which for the indexing and storing of a data set lying in a multidimensional cube on memory pages of given storage capacity of the in particular peripheral memory means, a repeated iterative division of the multidimensional cube into sub-cubes in all dimensions is made until successive sub-cubes can be collected together to regions which each contain a set of data objects which can be stored on one of the memory pages of given storage capacity.

2. A database system in accordance with claim 1, wherein the storing of the data objects of a region is performed on a memory page of given storage capacity under allocation of a pointer to the memory page and an address designating the region boundaries.

3. A database system in accordance with claim 2, wherein the storage of the pointer and the address is done in a B tree, a B* tree or a prefix B tree.

4. A database system in accordance with claim 3, wherein the storage of the data objects is done on the leaf pages of the B tree, B* tree or prefix B tree.

5. A database system in accordance with any of claims 2 to 4, wherein the address designating the region boundaries consists of data on the last of the sub-cubes forming the region.

6. A database system in accordance with claim 5, wherein the address comprises data on the number of sub-cubes contained at each division stage in the region.

7. A database system in accordance with any of claims 5 or 6, wherein the address consists of a sequence of numbers allocated to the last sub-cube in each case in the corresponding division stage still fully enclosed by the region.

8. A method for organizing an n-dimensional data set with n>1 on memory pages of given storage capacity, in particular for the operation of a database system in accordance with any of claims 1 to 7, wherein the data set lying in a multidimensional cube is repeatedly divided iteratively in all dimensions into sub-cubes until successive sub-cubes can be collected together to regions which each contain a set of data objects which can be stored on one of the memory pages of given storage capacity.

9. A method in accordance with claim 8, whereby for the indexing and storing of the data set on memory pages of given storage capacity of an in particular peripheral memory device, the following steps are performed:

   1) Formation of a starting region consisting of a total cube;
   2) Counting of the data objects existing in the starting region;
   3) Storing of the data objects of the starting region on a memory page, if the number of data objects of the starting region is not greater than the number of data objects corresponding to the given storage capacity of a memory page;
   4) Otherwise, the selection of a splitting address for the starting region in such a way that by splitting the starting region along the splitting address a first and a second partial region are created in which in each case around half the data objects of the starting region are contained;
   5) Continuation of the method from Step 2, with the first partial region taking on the role of the starting region;
   6) Performance of the method from Step 2, with the second partial region taking on the role of the starting region;

   with the Steps 5 and 6 being repeated in each case until the partial regions created in Step 4 each contain a set of data objects which can be stored on one of the memory pages of given storage capacity.

10. A method in accordance with claim 9, wherein the storing in accordance with Step 3 is performed with the parallel storing of an address allocated to the corresponding region and a pointer allocated to the address and referring to the memory page on which the data objects stored in accordance with Step 3 are contained.

11. A method in accordance with claim 10, wherein the storing of the address and the pointer is done in a B tree, B* tree or prefix B tree, with regions being defined in each case by successive addresses, the data objects of which regions are stored in each case on a memory page of given storage capacity.

**12.** A method in accordance with claim 8, wherein for the insertion of data objects into an n-dimensional data set with n>1 divided into regions and stored on memory pages of given storage capacity of an in particular peripheral storage device in particular in accordance with a method in accordance with any of claims 8 to 11 the following steps are performed:

1) Determination of a region of the n-dimensional data set associated with the data object to be inserted from the coordinates of the data object in the n-dimensional space;
2) Location of the memory page on which this region is stored;
3) Determination of the number of the data objects stored on this memory page;
4) Storage of the data object on this memory page, if the number of data objects stored is smaller than the number corresponding to the given storage capacity of the memory page;
5) Otherwise, selection of a splitting address for the region stored on this memory page in such a way that by splitting the region along the splitting address, a first and a second partial region are generated in which in each case less than roughly half of the number of data objects corresponding to the given storage capacity is contained;
6) Insertion of the data object in that partial region in which the coordinates of the data object lie;
7) Storage of the first and second partial regions on one memory page in each case.

**13.** A method in accordance with claim 12, wherein the locating of the memory page in accordance with Step 2 is performed by means of addresses and pointers stored in a B tree, a B* tree or a prefix B tree and allocated to the memory pages.

**14.** A method in accordance with claim 13, wherein the storage of the first and second partial regions in accordance with Step 7 is performed under replacement of the pointer and address of the region from Step 2 by the addresses and pointers allocated in each case to the first and second partial regions.

**15.** A method in accordance with claim 14, wherein the storage of the address and the pointer is done in a B tree, B* tree or prefix B tree, with regions being defined by successive addresses in each case, the data objects of which regions are stored in each case on a memory page of given storage capacity.

**16.** A method in accordance with claim 8, with for the deletion of data objects in an n-dimensional data set divided into regions and stored on memory pages of given storage capacity of an in particular peripheral memory device in particular in accordance with a method in accordance with any of claims 8 to 11 the following steps being performed:

1) Determination of a region of the n-dimensional data set associated with the data object to be deleted from the coordinates of the data object in the n-dimensional space;
2) Location of the memory page on which this region is stored;
3) Deletion of the data object on this memory page;
4) Determination of the number of data objects stored on this memory page;
5) Merging of the region with one of its two neighboring regions, if the number of stored data objects is smaller than around half of the number corresponding to the given storage capacity of the memory page;
6) Determination of the number of the data objects in the region newly created by the merger;
7) Storage of the region on one memory page, if the number of data objects existing in the region is not greater than the number corresponding to the given storage capacity of the memory page;
8) Otherwise, selection of a splitting address for the region in such a way that by splitting along the splitting address, a first partial region and a second partial region are generated which each contain roughly half of the data objects determined in accordance with Step 6, and storage of the partial regions on one memory page in each case.

**17.** A method in accordance with claim 16, whereby the location of the memory page in accordance with Step 2 is performed by means of addresses and pointers stored in a B tree, B* tree or prefix B tree and allocated to the memory pages.

**18.** A method in accordance with claim 8, with for the performance of a data query on the basis of a given n-dimensional query area in an n-dimensional data set divided into regions compiled from sub-cubes and stored on memory pages of given storage capacity of an in particular peripheral memory device in particular in accordance with a method in accordance with any of claims 8 to 11 the following steps being performed:

1) Determination of the coordinates of the lowest and highest point of intersection of the query area with the n-dimensional data set;

2) Determination of that region in which lies the lowest point of intersection and location of that memory page on which this region is stored;

3) Determination of all data objects stored on this memory page which form an intersection set with the query area and output of the data objects determined;

4) Determination of the last sub-cube in the succession of the region determined in Step 2, which sub-cube intersects the query area;

5) Ending of the data query, if the highest point of intersection lies in this sub-cube;

6) Otherwise, determination of the next sub-cube of the same plane and the same next higher cube which intersects the query area;

7) Determination of the coordinates of the lowest point of intersection of the query area with the sub-cube determined and continuation of the method at Step 2 if a sub-cube was determined in Step 6;

8) Otherwise, determination of the next sub-cube of the plane of the next higher cube from Step 6 which intersects the query area and performance of Step 6 with the sub-cubes of the cube determined;

9) Continuation of the method with Step 6 if in Step 8 no sub-cube of the plane of the next higher cube from Step 6 is determined, with the next higher cube taking over the role of the sub-cube.

## Revendications

1. Système de base de données comprenant un dispositif de calcul, une mémoire principale et un dispositif de mémoire, en particulier périphérique, dans lequel, pour l'indexation et la mémorisation d'un ensemble de données se trouvant dans un cube multidimensionnel sur des faces de mémoire d'une capacité de mémoire donnée appartenant au moyen de mémoire, en particulier périphérique, il se produit une division itérative répétitive du cube multidimensionnel en sous-cubes dans toutes les dimensions jusqu'à ce que des sous-cubes successifs puissent être réunis en régions qui contiennent chacune une quantité d'objets de données qui peuvent être mémorisés sur une des faces de mémoire d'une capacité de mémoire donnée.

2. Système de base de données selon la revendication 1, dans lequel la mémorisation des objets de données d'une région s'effectue sur une face de mémoire d'une capacité de mémoire donnée, avec attribution d'un pointeur à la face de mémoire et d'une adresse qui désigne les limites de régions.

3. Système de base de données selon la revendication 2, dans lequel la mémorisation du pointeur et de l'adresse s'effectue dans un arbre B, un arbre B* ou un arbre B-préfixe.

4. Système de base de données selon la revendication 3, dans lequel la mémorisation des objets de données s'effectue dans les faces feuilles de l'arbre B, de l'arbre B* ou de l'arbre B-préfixe.

5. Système de base de données selon l'une des revendications 2 à 4, dans lequel l'adresse désignant les limites de régions est composée d'indications concernant le dernier des sous-cubes qui forment la région.

6. Système de base de données selon la revendication 5, dans lequel l'adresse comprend des indications concernant le nombre des sous-cubes contenus dans la région sur chaque étage de subdivision.

7. Système de base de données selon l'une des revendications 5 ou 6, dans lequel l'adresse est composée d'une séquence de numéros affectés respectivement au dernier sous-cube situé sur l'étage de division considéré qui est encore entièrement inclus dans la région.

8. Procédé pour gérer un ensemble de données à n dimensions, avec n>1, sur des faces de mémoire d'une capacité de mémoire donnée, en particulier pour la gestion d'un système de base de données selon l'une des revendications 1 à 7, dans lequel l'ensemble de données qui se trouve dans un cube multidimensionnel est subdivisé en sous-cubes par itération répétitive dans toutes les dimensions jusqu'à ce que les sous-cubes successifs puissent être rassemblés en régions qui contiennent chacun une quantité d'objets de données qui peuvent être mémorisés sur une des faces de mémoire d'une capacité de mémoire donnée.

9. Procédé selon la revendication 8, dans lequel, pour l'indexation et la mémorisation de l'ensemble de données sur des faces de mémoire d'une capacité de mémoire donnée appartenant à un dispositif de mémoire, en particulier périphérique, les phases suivantes sont exécutées :

1) former une région de départ composée du cube complet,
2) compter les objets de données présents dans la région de départ,
3) mémoriser les objets de données de la région de départ sur une face de mémoire si le nombre des objets de données de la région de départ n'est pas plus grand que le nombre d'objets de données qui correspond à la capacité de mémoire prédéterminée d'une face de mémoire,
4) autrement, sélectionner une adresse de division pour la région de départ de telle manière que, par division de la région de départ le long de l'adresse de division, on produise des première et deuxième régions partielles dans chacune desquelles est respectivement contenue à peu près la moitié des objets de données de la région de départ,
5) continuer le procédé à partir de la phase 2, la première région partielle jouant alors le rôle de la région de départ,
6) exécuter le procédé à partir de la phase 2, la deuxième région partielle jouant alors le rôle de la région de départ, les phases 5 et 6 étant répétées jusqu'à ce que les régions partielles produites dans la phase 4 contiennent chacune une quantité d'objets de données qui peuvent être mémorisés sur une des faces de mémoire d'une capacité de mémoire donnée.

**10.** Procédé selon la revendication 9, dans lequel la mémorisation selon la phase 3 s'effectue avec mémorisation parallèle d'une adresse affectée à la région considérée, ainsi que d'un pointeur affecté à l'adresse et qui pointe la face de mémoire sur laquelle sont contenus les objets de données mémorisés conformément à la phase 3.

**11.** Procédé selon la revendication 10, dans lequel la mémorisation de l'adresse et du pointeur s'effectue dans un arbre B, un arbre B* ou un arbre B-préfixe, dans lequel des adresses successives définissent respectivement des régions dont les objets de données sont mémorisés dans chaque cas sur une face de mémoire d'une capacité de mémoire donnée.

**12.** Procédé selon la revendication 8, dans lequel, pour ajouter des objets de données dans un ensemble de données à $n$ dimensions, avec n>1, divisé en régions et mémorisé dans un dispositif de mémoire, en particulier périphérique sur des faces de mémoire d'une capacité de mémoire donnée, en particulier conformément à un procédé selon l'une des revendications 8 à 11, les phases suivantes sont exécutées :

1) déterminer une région de l'ensemble de données à $n$ dimensions qui appartient à l'objet de donnée à ajouter, en se basant sur les coordonnées de l'objet de donnée dans l'espace à n dimensions,
2) trouver la face de mémoire sur laquelle cette région est mémorisée,
3) déterminer le nombre des objets de données mémorisés sur cette face de mémoire,
4) mémoriser l'objet de donnée sur cette face de mémoire si le nombre des objets de données mémorisés est plus petit que le nombre correspondant à la capacité de mémoire donnée de la face de mémoire,
5) autrement, sélectionner une adresse de division pour la région mémorisée sur cette face de mémoire de telle manière que, par la division de la région le long de l'adresse de division, on produise des première et deuxième régions partielles dans chacune desquelles est respectivement contenue à peu près la moitié du nombre d'objets de données qui correspond à la capacité de mémoire donnée,
6) introduire l'objet de donnée dans la région partielle dans laquelle se trouvent les coordonnées de l'objet de donnée,
7) mémoriser les première et deuxième régions partielles chacune sur une face de mémoire.

**13.** Procédé selon la revendication 12, dans lequel la recherche de la face de mémoire s'effectue conformément à la phase 2 au moyen d'adresses et de pointeurs affectés aux faces de mémoire, qui sont mémorisés dans un arbre B, un arbre B* ou un arbre B-préfixe.

**14.** Procédé selon la revendication 13, dans lequel la mémorisation des première et deuxième régions partielles s'effectue conformément à la phase 7, avec remplacement du pointeur et de l'adresse de la région de la phase 2 par des adresses et pointeurs affectés respectivement aux première et deuxième régions partielles.

**15.** Procédé selon la revendication 14, dans lequel la mémorisation de l'adresse et du pointeur s'effectue dans un arbre B, un arbre B* ou un arbre B-préfixe, et dans lequel, par des adresses successives, sont définies des régions dont les objets de données sont mémorisés dans chaque cas sur une face de mémoire d'une capacité de mémoire donnée.

**16.** Procédé selon la revendication 8, dans lequel, pour effacer des objets de données dans un ensemble de données à $n$ dimensions, divisé en régions et mémorisé dans un dispositif de mémoire, en particulier périphérique sur des faces de mémoire d'une capacité de mémoire donnée, en particulier conformément à un procédé selon une des revendications 8 à 11, les phases suivantes sont exécutées :

1) déterminer une région de l'ensemble de données à n dimensions qui appartient à l'objet de donnée à effacer, en se basant sur les coordonnées de l'objet de donnée dans l'espace à $n$ dimensions,

2) trouver la face de mémoire sur laquelle cette région est mémorisée,

3) effacer l'objet de donnée sur cette face de mémoire,

4) déterminer le nombre des objets de données mémorisés sur cette face de mémoire,

5) fusionner la région avec une de ses deux régions adjacentes si le nombre des objets de données est plus petit qu'à peu près la moitié du nombre correspondant à la capacité de mémoire donnée de la face de mémoire,

6) déterminer le nombre des objets de données présents dans la région nouvellement formée par la fusion,

7) mémoriser la région sur une face de mémoire si le nombre des objets de données présents dans la région n'est pas plus grand que le nombre correspondant à la capacité de mémoire donnée de la face de mémoire,

8) autrement, sélectionner une adresse de division pour la région de manière que, par la division le long de l'adresse de division, on produise une première région partielle et une deuxième région partielle qui contiennent chacune à peu près la moitié des objets de données déterminés conformément à la phase 6, et mémoriser les régions partielles chacune sur une face de mémoire.

**17.** Procédé selon la revendication 16, dans lequel la recherche de la face de mémoire s'effectue conformément à la phase 2 au moyen d'adresses et de pointeurs affectés aux faces de données, mémorisés dans un arbre B, un arbre B* ou un arbre B-préfixe.

**18.** Procédé selon la revendication 8, dans lequel, pour l'exécution d'une interrogation de données sur la base d'une région d'interrogation donnée à $n$ dimensions dans un ensemble de données à n dimensions, divisé en régions qui sont composées de sous-cubes et mémorisé dans un dispositif de mémoire, en particulier périphérique sur des faces de mémoire d'une capacité de mémoire donnée, en particulier conformément à un procédé selon une des revendications 8 à 11, les phases suivantes sont exécutées :

1) déterminer les coordonnées du point d'intersection le plus bas et du point d'intersection le plus haut de la région d'interrogation qui comprend l'ensemble de données à $n$ dimensions,

2) déterminer la région dans laquelle se trouve le point d'intersection le plus bas et trouver la face de mémoire sur laquelle cette région est mémorisée,

3) détecter tous les objets de données mémorisés sur cette face de mémoire qui forment une intersection avec la région d'interrogation, et éditer les objets de données trouvés,

4) déterminer le sous-cube de la région déterminée dans la phase 2 qui est le dernier dans la séquence et qui est en intersection avec la région d'interrogation,

5) achever l'interrogation des données si le point d'intersection le plus élevé se trouve dans ce sous-cube,

6) autrement, trouver le sous-cube le plus proche dans le même plan et dans le même cube d'ordre supérieur à ce sous-cube, qui est en intersection avec la région d'interrogation,

7) déterminer les coordonnées du point d'intersection le plus bas de la région d'interrogation qui comprend le sous-cube trouvé et continuer le procédé dans la phase 2 si un sous-cube a été trouvé dans la phase 6,

8) autrement, trouver le sous-cube suivant du plan du cube d'ordre supérieur issu de la phase 6 qui est en intersection avec la région d'interrogation et exécuter la phase 6 avec les sous-cubes du cube trouvé,

9) continuer le procédé avec la phase 6 dans le cas où, dans la phase 8, on n'a pas trouvé de sous-cube du plan du cube d'ordre supérieur issu de la phase 6, le sous-cube d'ordre supérieur jouant alors le rôle du sous-cube.

FIG. 1

FIG. 2

FIG. 3.1

FIG. 3.2

FIG. 3.3

FIG. 3.4

FIG. 4

$$\alpha_0 \ p_1 \ \alpha_1 \ ..... \ \alpha_{i-1} \ p_i \ \alpha_i$$

$$ld_i^1 \ ld_i^2 \ .... \ ld_i^k$$

FIG. 5

$$... \ \alpha_{j-1} \ , \ p_j \ , \ \alpha_j \ , \ p_{j+1} \ , \ \alpha_{j+1} \ ...$$

$$page \ (\alpha_{j-1} \ , \ \alpha_j)$$

$$page \ (\alpha_j \ , \ \alpha_{j+1})$$

FIG. 6.1

$$... \ \alpha_{j-1} \ , \ p_j \ , \ \beta \ , \ p' \ , \ \alpha_j \ , \ p_{j+1} \ , \ \alpha_{j+1} \ ...$$

$$page \ (\alpha_{j-1} \ , \ \beta)$$

$$page \ (\beta \ , \ \alpha_j)$$

$$page \ (\alpha_j \ , \ \alpha_{j+1})$$

FIG. 6.2

FIG. 7

FIG. 8

$(ql_1, ql_2)$

$(qh_1, qh_2)$

FIG. 9

q

β

$\beta'.2$

$\beta'.2$

$\beta.4$

$\beta'.3$

$\beta'.2$

Query-Box q

Vater ( $\beta$ )

Großvater ( $\beta$ )

FIG. 10

Landkarte

bb(O)

Objekt O

FIG. 11